(19) Europäisches Patentamt
European Patent Office
Office européen des brevets

(11) **EP 4 657 958 A1**

(12) **EUROPEAN PATENT APPLICATION**
published in accordance with Art. 153(4) EPC

(43) Date of publication:
**03.12.2025 Bulletin 2025/49**

(21) Application number: **23918101.9**

(22) Date of filing: **28.01.2023**

(51) International Patent Classification (IPC):
**H04W 72/232** (2023.01)

(52) Cooperative Patent Classification (CPC):
**H04W 72/1268; H04W 72/21; H04W 72/232**

(86) International application number:
**PCT/CN2023/073578**

(87) International publication number:
**WO 2024/156094 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **GAO, Xueyuan
Beijing 100085 (CN)**

(74) Representative: **Dehns Germany Partnerschaft
mbB
Theresienstraße 6-8
80333 München (DE)**

(54) **UPLINK TRANSMISSION CONTROL METHOD AND APPARATUS**

(57) The present disclosure provides an uplink transmission control method and apparatus. The method comprises: when in an uplink simultaneous transmission across multiple panels (STxMP) scenario, physical uplink shared channel (PUSCH) transmission is scheduled to multi-transmission and reception point (TRP) single frequency network (SEN) transmission by a network scheduler on the basis of a single piece of downlink control information (DCI), receiving a phase fracking reference signal (PTRS)-related transmission configuration information sent by a network device; and for codebook-based PUSCH transmission, on the basis of the PTRS-related transmission configuration information and a preset protocol rule, determining PTRS actual sending parameters for performing the PUSCH transmission, and respectively sending PTRSs by means of the SFN transmission on PUSCH transmission occasions (TOs) corresponding to different panels/TRPs/beam TCI states/sounding reference signal (SRS) resource sets. The solution provided by the present disclosure can achieve enhancement indication of PTRSs under SFN transmission, thereby supporting CPE estimation of multiple panels of a terminal under a codebook-based configuration by using an SFN scheme under STxMP transmission, and effectively improving the reliability and throughput rate of data transmission.

```
in an uplink STxMP scenario, under network scheduling of a PUSCH
scheduled based on single DCI being a multi-TRP SFN transmission
mode, receiving transmission configuration information related to a
PTRS sent by a network device, wherein the transmission
configuration information includes at least one of: a maximum
number of PTRS ports; a TPMI indication field; a DMRS port
indication field, or a PTRS-DMRS association indication field
```
— S201

```
determining an actual PTRS transmission parameter for the PUSCH
transmission based on the transmission configuration information
related to the PTRS and a preset protocol rule, and sending the PTRS
in an SFN transmission mode respectively on TOs of the PUSCH
corresponding to different antenna panels/TRPs/beam TCI states/SRS
resource sets, wherein the actual PTRS transmission parameter
includes: an actual number of PTRS ports, and a DMRS port used by
an actually transmitted PTRS port
```
— S202

FIG. 2

**EP 4 657 958 A1**

**Description**

**TECHNICAL FIELD**

The disclosure relates to the field of mobile communication technology, and in particular to a method and an apparatus for controlling uplink transmission.

**BACKGROUND**

In a new radio (NR) system, to improve cell-edge coverage and provide better quality of service within a service area, multi-point coordinated transmission has become an important technical means. In Release 18 (Rel-18), it is expected to achieve simultaneous coordinated transmission via multiple antenna panels towards multiple transmission and reception points (TRP), so as to enhance transmission reliability and throughput. Thus, user equipment (UE) is required to have a capability of simultaneously sending a plurality of beams. The multi-antenna panel/multi-TRP transmission may be scheduled based on a single physical downlink control channel (PDCCH).

To support a single frequency network (SFN) scheme for uplink simultaneous transmission from multiple antenna panels/multiple TRPs based on single downlink control information (DCI), it is necessary to address the SFN transmission and reception of a phase-tracking reference signal (PTRS) for supporting a physical uplink shared channel (PUSCH).

**SUMMARY**

The disclosure provides a method and an apparatus for controlling uplink transmission. According to the provided technical solution, mechanism, method and apparatus, an enhanced indication for the phase-tracking reference signal (PTRS) transmission in the single frequency network (SFN) transmission mode may be achieved, thus supporting common phase error (CPE) estimation of the terminal with multiple panels under a codebook-based configuration in the SFN scheme for simultaneous transmission from multi-panels (STxMP), so that multi-point coordinated transmission becomes more effective, the reliability and throughput of data transmission are effectively improved.

A first aspect embodiment of the disclosure provides a method for controlling uplink transmission. The method is performed by a user equipment (UE), including: in an uplink STxMP, under network scheduling of a physical uplink shared channel (PUSCH) scheduled based on single downlink control information (DCI) being a multi- transmission and reception point (TRP) SFN transmission mode, receiving transmission configuration information related to a PTRS sent by a network device, in which the transmission configuration information includes at least one of: a maximum number of PTRS ports; a transmission precoding matrix indicator (TPMI) indication field; a demodulation reference signal (DMRS) port indication field, or a PTRS-DMRS association indication field; and for PUSCH transmission based on a codebook, determining an actual PTRS transmission parameter for the PUSCH transmission based on the transmission configuration information related to the PTRS and a preset protocol rule, and sending the PTRS in an SFN transmission mode respectively on transmission occasions (TOs) of the PUSCH corresponding to different antenna panels/TRPs/beam TCI states/sounding reference signal (SRS) resource sets, in which the actual PTRS transmission parameter includes: an actual number of PTRS ports, and a DMRS port used by an actually transmitted PTRS port.

In some embodiments of the disclosure, DMRS ports or DMRS port groups corresponding to the TOs of the PUSCH that are associated with and correspond to different antenna panels/TRPs/beam TCI states/SRS resource sets are identical.

In some embodiments of the disclosure, sending the PTRS in the SFN transmission mode respectively on the TOs of the PUSCH corresponding to different antenna panels/TRPs/beam TCI states/SRS resource sets includes: in the multi-TRP SFN transmission mode of the PUSCH, sending an identical amount of PTRS port data on the TOs of the PUSCH corresponding to different antenna panels/TRPs/beam TCI states/SRS resource sets, in which each PTRS port data is identical and sent via one or more identical DMRS ports.

In some embodiments of the disclosure, determining the actual PTRS transmission parameter for the PUSCH transmission based on the transmission configuration information and the preset protocol rule, and sending the PTRS in the SFN transmission mode respectively on the TOs of the PUSCH corresponding to different antenna panels/TRPs/beam TCI states/SRS resource sets includes: in response to different numbers of PTRS ports actually corresponding to precoders indicated by different TPMI indication fields, determining the actual PTRS transmission parameter based on the maximum number of PTRS ports, an association relationship between PTRS-DMRS ports indicated by the PTRS-DMRS association indication field and the preset protocol rule; and sending the PTRS in the SFN transmission mode respectively on the TOs of the PUSCH corresponding to different antenna panels/TRPs/beam TCI states/SRS resource sets based on the actual PTRS transmission parameter.

In some embodiments of the disclosure, the preset protocol rule includes any one of: the actual number of PTRS ports being a number of PTRS ports corresponding to a preset TPMI, the preset TPMI being one among TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; the actual number of PTRS ports being a minimum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; or the actual number of PTRS ports being a maximum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets.

In some embodiments of the disclosure, the method further includes: receiving a radio resource control (RRC) signaling sent by the network device, in which the RRC signaling includes the maximum number of PTRS ports, and the actual number of PTRS ports is less than or equal to the maximum number of PTRS ports.

In some embodiments of the disclosure, in response to a data transmission layer RANK being equal to 1, the PTRS-DMRS association indication field is null, the PTRS is actually sent via a single port respectively on different TOs of the PUSCH, and an indicated DMRS port is used for sending the PTRS.

In some embodiments of the disclosure, in response to a data transmission layer RANK being greater than or equal to 2 and the actual number of PTRS ports being 1, the DMRS port used by the actually transmitted PTRS port is determined based on the PTRS-DMRS association indication field via one of following manners: indicating two associated DMRS ports with 2 bits; or indicating one of first two DMRS ports or one of DMRS ports sharing an identical PTRS port with 1 bit, in which sending the PTRS in the SFN transmission mode respectively on the TOs of the PUSCH corresponding to different antenna panels/TRPs/beam TCI states/SRS resource sets includes: determining the DMRS port used by the actually transmitted PTRS port based on the PTRS-DMRS association indication field, and sending the PTRS using the DMRS ports respectively on different TOs of the PUSCH.

In some embodiments of the disclosure, in response to a data transmission layer RANK being greater than or equal to 2 and the actual number of PTRS ports for the PUSCH transmission being 2, the DMRS port used by the actually transmitted PTRS port is determined based on the PTRS-DMRS association indication field via one of following manners: indicating two associated DMRS ports with 2 bits; or indicating only one of first two DMRS ports or only one of two DMRS ports sharing an identical PTRS port with 1 bit; in which sending the PTRS in the SFN transmission mode respectively on the TOs of the PUSCH corresponding to different antenna panels/TRPs/beam TCI states/SRS resource sets includes: determining a first DMRS port corresponding to a first actually transmitted PTRS port on the TOs of the PUSCH corresponding to different antenna panels/TRPs/beam TCI states/SRS resource sets based on the PTRS-DMRS association indication field, determining a second DMRS port corresponding to a second actually transmitted PTRS port on the TOs of the PUSCH corresponding to different antenna panels/TRPs/beam TCI states/SRS resource sets based on a default rule, and sending the PTRS respectively via the first DMRS port and the second DMRS port.

In some embodiments of the disclosure, the DMRS port determined based on the default rule is any one of: the other of first two DMRS ports; any one of other DMRS ports when the data transmission layer RANK is greater than 2; or any one of the two DMRS ports sharing the identical PTRS port.

In some embodiments of the disclosure, when determining the DMRS port associated with the PTRS, the DMRS port associated with the PTRS is determined via respective TPMIs corresponding to respective antenna panels/TRPs/beam TCI states/SRS resource sets/TOs of the PUSCH determined based on the preset protocol rule, and identical PTRS ports are sent respectively on identical DMRS ports simultaneously on the TOs of the PUSCH corresponding to different antenna panels/TRPs/beam TCI states/SRS resource sets.

In some embodiments of the disclosure, different SRS resource sets are associated with PUSCH transmissions on multiple antenna panels, and a corresponding relationship between different SRS resource sets and SRS resource indicator (SRI)/TPMI indication fields is indicated by an SRS resource set indicator indication field.

A second aspect embodiment of the disclosure provides a method for controlling uplink transmission. The method is performed by a network device, including: in an uplink STxMP scenario, under network scheduling of a PUSCH scheduled based on single DCI being a multi-TRP SFN transmission mode, sending transmission configuration information related to a PTRS to a UE, in which the transmission configuration information includes at least one of: a maximum number of PTRS ports; a TPMI indication field; a DMRS port indication field, or a PTRS-DMRS association indication field; and for PUSCH transmission based on a codebook, determining an actual PTRS receiving parameter for the PUSCH transmission based on the transmission configuration information related to the PTRS and a preset protocol rule, and receiving the PTRS in an SFN transmission mode respectively on TOs of the PUSCH corresponding to different antenna panels/TRPs/beam TCI states/sounding reference signal (SRS) resource sets, in which the actual PTRS receiving parameter includes: an actual number of PTRS ports, and a DMRS port corresponding to an actually received PTRS.

In some embodiments of the disclosure, DMRS ports or DMRS port groups corresponding to the TOs of the PUSCH that are associated with and correspond to different antenna panels/TRPs/beam TCI states/SRS resource sets are identical.

In some embodiments of the disclosure, receiving the PTRS in the SFN transmission mode respectively on the TOs of the PUSCH corresponding to different antenna panels/TRPs/beam TCI states/SRS resource sets includes: in the multi-TRP SFN transmission mode of the PUSCH, receiving an identical amount of PTRS port data on the TOs of the PUSCH corresponding to different antenna panels/TRPs/beam TCI states/SRS resource sets, in which each PTRS port data is identical and received via one or more identical DMRS ports.

In some embodiments of the disclosure, determining the actual PTRS receiving parameter for the PUSCH transmission based on the transmission configuration information and the preset protocol rule, and receiving the PTRS in the SFN transmission mode respectively on the TOs of the PUSCH corresponding to different antenna panels/TRPs/beam TCI states/SRS resource sets includes: in response to different numbers of PTRS ports actually corresponding to precoders indicated by different TPMI indication fields, determining the actual PTRS receiving parameter based on the preset protocol rule, and receiving the SFN respectively on the TOs of the PUSCH corresponding to different antenna panels/TRPs/beam TCI states/SRS resource sets.

In some embodiments of the disclosure, the preset protocol rule includes any one of: the actual number of PTRS ports being a number of PTRS ports corresponding to a preset TPMI, the preset TPMI being one among TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; the actual number of PTRS ports being a minimum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; or the actual number of PTRS ports being a maximum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets.

In some embodiments of the disclosure, the method further includes: sending a RRC signaling to the UE, in which the RRC signaling includes the maximum number of PTRS ports, and the actual number of PTRS ports is less than or equal to the maximum number of PTRS ports.

In some embodiments of the disclosure, in response to a data transmission layer RANK being equal to 1, the PTRS-DMRS association indication field is null, the PTRS is actually received via a single port respectively on different TOs of the PUSCH, and an indicated DMRS port is used for receiving the PTRS.

In some embodiments of the disclosure, in response to a data transmission layer RANK being greater than or equal to 2 and the actual number of PTRS ports being 1, the DMRS port used by the actually transmitted PTRS port is determined based on the PTRS-DMRS association indication field via one of following manners: indicating two associated DMRS ports with 2 bits; or indicating one of first two DMRS ports or one of DMRS ports sharing an identical PTRS port with 1 bit; in which receiving the PTRS in the SFN transmission mode respectively on the TOs of the PUSCH corresponding to different antenna panels/TRPs/beam TCI states/SRS resource sets includes: determining the DMRS port used by the actually received PTRS port based on the PTRS-DMRS association indication field, and receiving the PTRS using the DMRS port respectively on different TOs of the PUSCH.

In some embodiments of the disclosure, in response to a data transmission layer RANK being greater than or equal to 2 and the actual number of PTRS ports being 2, the DMRS port used by the actually transmitted PTRS port is determined based on the PTRS-DMRS association indication field via one of following manners: indicating two associated DMRS ports with 2 bits; or indicating only one of the first two DMRS ports or only one of the two DMRS ports sharing an identical PTRS port with 1 bit; in which receiving the PTRS in the SFN transmission mode respectively on the TOs of the PUSCH corresponding to different antenna panels/TRPs/beam TCI states/SRS resource sets includes: determining a first DMRS port corresponding to a first actually received PTRS port on the TOs of the PUSCH corresponding to different antenna panels/TRPs/beam TCI states/SRS resource sets based on the PTRS-DMRS association indication field, determining a second DMRS port corresponding to a second actually received PTRS port on the TOs of the PUSCH corresponding to different antenna panels/TRPs/beam TCI states/SRS resource sets based on a default rule, and receiving the PTRS respectively via the first DMRS port and the second DMRS port.

In some embodiments of the disclosure, the DMRS port determined based on the default rule is any one of: the other of first two DMRS ports; any one of other DMRS ports when the data transmission layer RANK is greater than 2; or any one of the two DMRS ports sharing the identical PTRS port.

In some embodiments of the disclosure, when determining the DMRS port associated with the PTRS, the DMRS port associated with the PTRS is determined via respective TPMIs corresponding to respective antenna panels/TRPs/-beam TCI states/SRS resource sets/TOs of the PUSCH determined based on the preset protocol rule, and identical PTRS ports are received respectively on identical DMRS ports simultaneously on the TOs of the PUSCH corresponding to different antenna panels/TRPs/beam TCI states/SRS resource sets.

In some embodiments of the disclosure, different SRS resource sets are associated with the PUSCH transmissions on multiple antenna panels, and a corresponding relationship between different SRS resource sets and SRI/TPMI fields is indicated by an SRS resource set indicator indication field.

A third aspect embodiment of the disclosure provides an apparatus for controlling uplink transmission. The apparatus is configured in a UE, including a transceiver module, in which the transceiver module is configured to: in an uplink STxMP scenario, under network scheduling of a PUSCH scheduled based on single DCI being a multi-TRP SFN transmission mode, receive transmission configuration information related to a PTRS sent by a network device, in which the transmission configuration information includes at least one of: a maximum number of PTRS ports; a TPMI indication field; a DMRS port indication field, or a PTRS-DMRS association indication field; and for PUSCH transmission based on a codebook, determine an actual PTRS transmission parameter for the PUSCH transmission based on the transmission configuration information related to the PTRS and a preset protocol rule, and send the PTRS in an SFN transmission mode respectively on TOs of the PUSCH corresponding to different antenna panels/TRPs/beam TCI states/SRS resource sets, in which the actual PTRS transmission parameter includes: an actual number of PTRS ports, and a DMRS port used by an actually transmitted PTRS port.

A fourth aspect embodiment of the disclosure provides an apparatus for controlling uplink transmission. The apparatus is configured in a network device, including a transceiver module, in which the transceiver module is configured to: in an uplink STxMP scenario, under network scheduling of a PUSCH scheduled based on single DCI being a multi-TRP SFN transmission mode, send transmission configuration information related to a PTRS to a UE, in which the transmission configuration information includes at least one of: a maximum number of PTRS ports; a TPMI indication field; a DMRS port indication field, or a PTRS-DMRS association indication field; and for PUSCH transmission based on a codebook, determine an actual PTRS receiving parameter for the PUSCH transmission based on the transmission configuration information related to the PTRS and a preset protocol rule, and receive the PTRS in an SFN transmission mode respectively on TOs of the PUSCH corresponding to different antenna panels, in which the actual PTRS receiving parameter includes: an actual number of PTRS ports, and a DMRS port corresponding to an actually received PTRS.

A fifth aspect embodiment of the disclosure provides a communication device. The communication device includes: a transceiver; a memory; a processor connected to the transceiver and the memory, configured to control wireless signal transmission and reception of the transceiver by executing computer-executable instructions stored in the memory, and enable the method for controlling uplink transmission in the first aspect embodiment or in the second aspect embodiment to be implemented.

A sixth aspect embodiment of the disclosure provides a computer storage medium. The computer storage medium stores computer-executable instructions which, when executed by a processor, enable the method for controlling uplink transmission in the first aspect embodiment or in the second aspect embodiment to be implemented.

Embodiments of the disclosure provide a method and an apparatus for controlling uplink transmission. In the uplink STxMP scenario, when the PUSCH configured by the network is in the multi-TRP SFN transmission mode, the UE receives the transmission configuration information related to the PTRS sent by the network device. The transmission configuration information includes two or more groups of DCI information indication fields for the multi-TRP SFN transmission, in which each group of DCI information indication fields includes at least: a maximum number of PTRS ports; a TPMI indication field; a DMRS port indication field, and a PTRS-DMRS association indication field. For the PUSCH transmission based on the codebook, the actual PTRS transmission parameter for the PUSCH transmission is determined based on the transmission configuration information related to the PTRS and the preset protocol rule, and the PTRS is sent in the SFN transmission mode respectively on TOs of the PUSCH corresponding to different antenna panels/TRPs/beam TCI states/SRS resource sets, in which the actual PTRS transmission parameter includes: an actual number of PTRS ports, and a DMRS port used by an actually transmitted PTRS port. The technical solution provided in the disclosure achieves the enhanced indication for the PTRS transmission in the SFN transmission mode, thus supporting CPE estimation of the terminal with multiple panels under a codebook-based configuration in the SFN scheme for STxMP, so that multi-point coordinated transmission becomes more effective, the reliability and throughput of data transmission are effectively improved.

Additional aspects and advantages of the present disclosure will be set forth in part in the description which follows, and in part will be obvious from the description, or will be learned by practice of the present disclosure.

**BRIEF DESCRIPTION OF THE DRAWINGS**

The above-mentioned and/or additional aspects and advantages of the disclosure will become apparent and readily appreciated from the following description of embodiments, taken in combination with the accompanying figures.

FIG. 1 is a schematic diagram illustrating multi-transmission and reception point (TRP) transmission based on single downlink control information (DCI) according to an embodiment of the disclosure.

FIG. 2 is a flow chart illustrating a method for controlling uplink transmission according to an embodiment of the disclosure.

FIG. 3 is a flow chart illustrating a method for controlling uplink transmission according to an embodiment of the disclosure.

FIG. 4 is a flow chart illustrating a method for controlling uplink transmission according to an embodiment of the disclosure.

FIG. 5 is a flow chart illustrating a method for controlling uplink transmission according to an embodiment of the disclosure.

FIG. 6 is a block diagram illustrating an apparatus for controlling uplink transmission according to an embodiment of the disclosure.

FIG. 7 is a block diagram illustrating an apparatus for controlling uplink transmission according to an embodiment of the disclosure.

FIG. 8 is a block diagram illustrating a structure of a communication device provided in an embodiment of the disclosure.

FIG. 9 is a block diagram illustrating a structure of a chip provided in an embodiment of the disclosure.

## DETAILED DESCRIPTION

Embodiments of the disclosure are described in detail below, and examples of the embodiments are illustrated in the accompanying figures, throughout which the same or similar symbols indicate the same or similar components or components with the same or similar functions. The embodiments described below by reference to the accompanying figures are exemplary and are intended to be used to explain the disclosure and are not to be construed as a limitation of the disclosure.

In 5G/NR Rel-16, operations related to multiple transmission and reception points (TRPs) are primarily introduced for physical downlink shared channel (PDSCH) transmission. The operations related to the multiple TRPs may include a single downlink control information (S-DCI) operation and a multi-DCI operation. Using the S-DCI, a single physical downlink control channel (PDCCH) may be configured to schedule a plurality of PDSCH transmissions from the multiple TRPs.

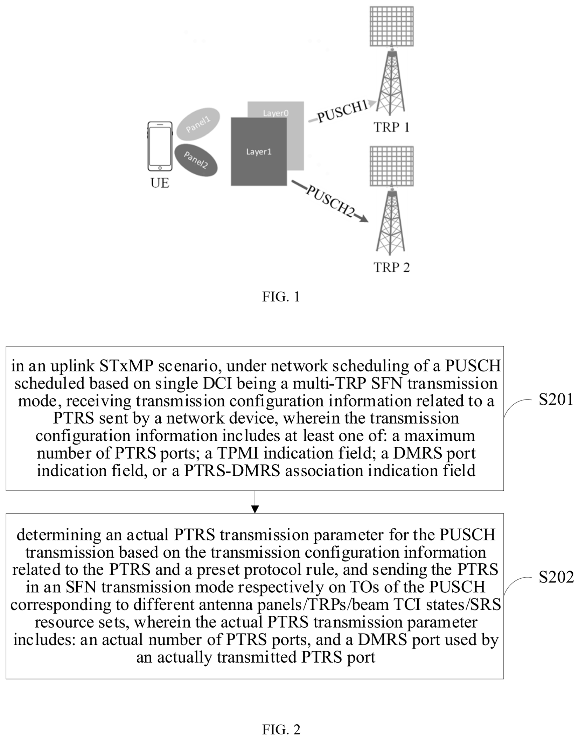

FIG. 1 is a schematic diagram illustrating multi-TRP transmission based on single DCI according to an embodiment of the disclosure. For example, two TRPs (TRP 1 and TRP 2) are provided to communicate with a UE with multiple antenna panels (Panel 1 and Panel 2). As shown in FIG. 1, for the S-DCI operation, the transmissions may be scheduled based on single DCI carried by one PDCCH, or may be separately scheduled based on different DCIs carried by different PDCCHs.

As described above, the operations related to the multiple TRPs may include the S-DCI operation and the multi-DCI operation. On the other hand, the operations related to the multiple TRPs may include the multi-TRP related operations for downlink (e.g., PDSCH) and the multi-TRP related operations for uplink (e.g., PUSCH). In 5G/NR Rel-16, the operations related to the multiple TRPs are primarily introduced for the PDSCH transmission, but operations related to the multiple TRPs for the PUSCH transmission are not defined. In the R17 standard, under the multi-TRP scenario, uplink enhancement supports a repetition transmission scheme for PUSCH/PUCCH channels where a time-division multiplexing (TDM) manner may be adopted to send uplink channels to different TRPs on the base station side in different uplink beam directions.

For example, the multi-panel terminal is generally configured with a plurality of physical panels. The capabilities of different panels may differ from each other, such as having different numbers of SRS ports, and a maximum number of data transmission layers (i.e., maxRANK) supported by each panel not necessarily being identical, e.g., one panel supports up to 2-layer transmission (i.e., maxRANK=2), another panel supports up to 4-layer transmission (i.e., maxRANK=4). A network scheduler may determine whether the terminal is currently suitable for uplink simultaneous transmission from multiple panels. If the terminal is currently suitable for the uplink simultaneous transmission from multiple panels and the terminal is simultaneously scheduled, the network directly or indirectly indicates related transmission parameters, including specific beam indication information of the terminal, a value of the RANK used, an allocation situation of demodulation reference signal (DMRS) ports used, and precoding indication information. Thus, it is necessary to determine a configuration and a specific indication of the PTRS ports scheduled by the S-DCI.

In R18, a transmission scheme that may be supported by the uplink simultaneous transmission includes an uplink simultaneous transmission for multiple antenna panels/TRPs/transmission configuration indications (TCIs). Currently, bottlenecks of communication systems remain in the rate/speed and coverage of the uplink transmission. Thus, the system enhancement directions in the R18 standard mainly includes improving the uplink rate and further enhancing the transmission reliability by performing the uplink simultaneous transmission using the multi-panel terminal in the multi-TRP scenarios. The transmission may be scheduled based on one single DCI carried by one PDCCH, or may be separately scheduled based on different DCIs carried by different PDCCHs. The coordinated transmission of one transport block (TB) of the PUSCH transmission based on the S-DCI includes a plurality of different transmission schemes. The currently considered simultaneous transmission schemes are mainly implemented by channel transmissions from different panels via space division multiplexing (SDM) or frequency division multiplexing (FDM). Each transmission scheme is briefly described below:

One scheme is an SDM scheme. One TB of the PUSCH is sent on identical time-frequency resources toward two different TRPs via respective corresponding DMRS ports or port groups allocated on different panels. Different panels/TRPs/TOs are respectively associated with different TCI states, i.e., associated with different beams. Based on this, the SDM scheme is specifically divided into two schemes, an SDM-A scheme and an SDM-B scheme. In the SDM-A scheme, different portions of one TB of the PUSCH are sent on the identical time-frequency resources toward two different TRPs via respective corresponding DMRS ports or port groups allocated on different panels. Different panels/TRPs/TOs are respectively associated with different TCI states. In the SDM-B scheme, repetitions of the identical TB of the PUSCH corresponding to different redundancy versions (RVs) are sent on the identical time-frequency resources toward two different TRPs via respective corresponding DMRS ports or port groups allocated on different panels. Different panels/TRPs/TOs are respectively associated with different TCI states.

Another scheme is a FDM scheme. One TB of PUSCH is sent on non-overlapping frequency domain resources in identical time domain resources toward two different TRPs via identical DMRS ports or port groups allocated on different panels. Different panels/TRPs/TOs are respectively associated with different TCI states. Based on this, the FDM scheme is specifically divided into two schemes, a FDM-A scheme and a FDM-B scheme. In the FDM-A scheme, different portions of one TB of the PUSCH are sent on the non-overlapping frequency domain resources in the identical time domain resources toward two different TRPs via identical DMRS ports or port groups allocated on different panels. Different panels/TRPs/TOs are respectively associated with different TCI states. In the FDM-B scheme, repetitions of the identical TB of the PUSCH corresponding to different RVs are sent on the non-overlapping frequency domain resources in the identical time domain resources toward two different TRPs via identical DMRS ports or port groups allocated on different panels. Different panels/TRPs/TOs are respectively associated with different TCI states.

Another scheme is a spatial multiplexing SFN scheme. One TB of the PUSCH is sent on identical time-frequency resources toward two different TRPs via identical DMRS ports or port groups allocated on different panels. Different panels/TRPs/TOs are respectively associated with different TCI states. It should be understood that the scheme exemplarily shown in FIG. 1 is the multi-TRP transmission adopting the SDM transmission mode, which uses different antenna ports to transmit different data layers. Similarly, for the SFN transmission schemes, identical antenna ports may be used to transmit identical data layers, which will not be described here.

The uplink simultaneous transmission from multiple panels for the PUSCH generally supports one or more of the above schemes.

In R18 uplink enhancement, it is considered on how to support the higher throughput rate and more reliable transmission performance via the uplink simultaneous transmission from multiple panels/TRPs.

To support the SFN scheme for the uplink simultaneous transmission from multiple panels based on the S-DCI, transmission schemes for the DMRS and the PTRS also need to be determined. For the DMRS, the SFN transmission schemes are currently mainly considered, i.e., using identical DMRS ports for transmission on different panels. For the PTRS, impacts of different schemes for the SFN transmission and the non-SFN transmission also need consideration.

In the current protocols, when supporting the PTRS transmission for the PUSCH transmission based on the codebook (CB), an identical PTRS port may be associated with an identical DMRS port group corresponding to different SRS resource sets. However, an actual number of PTRS ports corresponding to TPMI indication fields that are associated with different SRS resource sets may be inconsistent, causing the actually transmitted PTRS not to be in the SFN transmission mode. Thus, solutions to this problem need consideration to support the PTRS transmission for the PUSCH transmission based on the codebook to be in the SFN transmission mode.

The disclosure provides a technical solution that achieves the enhanced indication for the PTRS transmission in the SFN transmission mode, thus supporting CPE estimation of the terminal with multiple panels under a codebook-based configuration in the SFN scheme for STxMP, so that multi-point coordinated transmission becomes more effective, the reliability and throughput of data transmission are effectively improved.

The method and the apparatus for controlling an uplink transmission provided in the disclosure are described in detail below in connection with the accompanying drawings.

FIG. 2 is a flow chart illustrating a method for controlling uplink transmission according to an embodiment of the disclosure. As shown in FIG. 2, the method may be performed by a UE and may include the following steps S201 to S202.

At S201, in an uplink STxMP scenario, under network scheduling of a PUSCH scheduled based on single DCI being a multi-TRP SFN transmission mode, transmission configuration information related to a PTRS sent by a network device is received, in which the transmission configuration information includes at least one of: a maximum number of PTRS ports; a TPMI indication field; a DMRS port indication field, or a PTRS-DMRS association indication field.

In the embodiment, the transmission configuration information may dynamically include two or more groups of DCI information indication fields for the multi-TRP SFN transmission. Each group of the information indication fields includes at least: the maximum number of PTRS ports, the TPMI indication field, and PTRS-DMRS association indication field. However, the disclosure is not limited here. Each group of the information indication fields may also include other information indication fields.

In some embodiments, TCI beam indication information in the single DCI indicates two or more beams, and the transmission configuration information may include two or more TPMI indication fields. Each TPMI indication field indicates a precoding matrix of the PUSCH transmission in a corresponding beam direction. Then the single DCI is used for the multi-antenna panel multi-TRP transmission, and the multi-antenna panel multi-TRP transmission is the PUSCH transmission based on a codebook. For the PUSCH transmission in each beam direction, a TPMI indication field indicates the precoding matrix used for the PUSCH transmission.

In some embodiments, TCI beam indication information in the single DCI indicates two or more beams, and the transmission configuration information may include two or more SRS resource indicator (SRI) indication fields. Each SRI indication field indicates one or more SRS resources carrying precoding information from an SRS resource set allocated for the PUSCH transmission in a corresponding beam direction. Then, the single DCI is used for the multi-antenna panel multi-TRP transmission, and the multi-antenna panel multi-TRP transmission is the PUSCH transmission based on a non-codebook. For the PUSCH transmission in each beam direction, an SRI indication field indicates one or more SRS resources selected from the SRS resource set allocated for the PUSCH transmission. For the PUSCH transmission based on the codebook, a corresponding spatial filter for the PUSCH transmission is selected via the SRI indication, that is, the PUSCH uses spatial relation information (TCI or spatial relation info) corresponding to the SRS resources selected by the SRI as the spatial filter for transmission. For the PUSCH transmission based on the non-codebook, precoding information calculated and recommended by the terminal for the PUSCH transmission is carried in a plurality of SRS resources with a single port in the SRS resource set. Each SRS resource carries the precoding information used for one corresponding data layer. The base station performs scheduling selection on the precoding information reported by the terminal through measurement, and selects the precoding information via the SRI indication, that is, selects one or more SRS resources from the corresponding SRS resource set. After receiving the SRI indication from the base station, the terminal uses precoding corresponding to one or more SRS resources as precoding used for the PUSCH transmission.

At S202, for PUSCH transmission based on a codebook, an actual PTRS transmission parameter for the PUSCH transmission is determined based on the transmission configuration information related to the PTRS and a preset protocol rule, and the PTRS is sent in an SFN transmission mode respectively on TOs of the PUSCH corresponding to different antenna panels/TRPs/beam TCI states/SRS resource sets, in which the actual PTRS transmission parameter includes: an actual number of PTRS ports, and a DMRS port used by an actually transmitted PTRS port.

In an embodiments of the disclosure, the UE may determine the actual PTRS transmission parameter based on the maximum number of PTRS ports, the association indication between PTRS ports and DMRS ports, and the preset protocol rule. The actual PTRS transmission parameter include but are not limited to the actual number of PTRS ports, and the DMRS port used by the actually transmitted PTRS port.

In an embodiment of the disclosure, the maximum number of PTRS ports may be configured by higher layers. For example, the maximum number of PTRS ports may be configured via a radio resource control (RRC) signaling. The disclosure is not limited here.

According to the method for controlling uplink transmission provided in the embodiments of the disclosure, in the uplink STxMP scenario, when the PUSCH configured by the network is in the multi-TRP SFN transmission mode, the UE receives the transmission configuration information related to the PTRS sent by the network device. The transmission configuration information includes two or more groups of DCI information indication fields for the multi-TRP SFN transmission. Each group of DCI information indication fields includes at least: a maximum number of PTRS ports; a TPMI indication field; a DMRS port indication field, or a PTRS-DMRS association indication field. For the PUSCH transmission based on the codebook, the actual PTRS transmission parameter for the PUSCH transmission is determined based on the transmission configuration information related to the PTRS and a preset protocol rule, and the PTRS is sent in an SFN transmission mode respectively on TOs of the PUSCH corresponding to different antenna panels/TRPs/beam TCI states/SRS resource sets, in which the actual PTRS transmission parameter includes: an actual number of PTRS ports, and a DMRS port used by an actually transmitted PTRS port. The technical solution provided in the disclosure achieves the enhanced indication for the PTRS transmission in the SFN transmission mode, thus supporting CPE estimation of the terminal with multiple panels under a codebook-based configuration in the SFN scheme for STxMP, so that multi-point coordinated transmission becomes more effective, the reliability and throughput of data transmission are effectively improved.

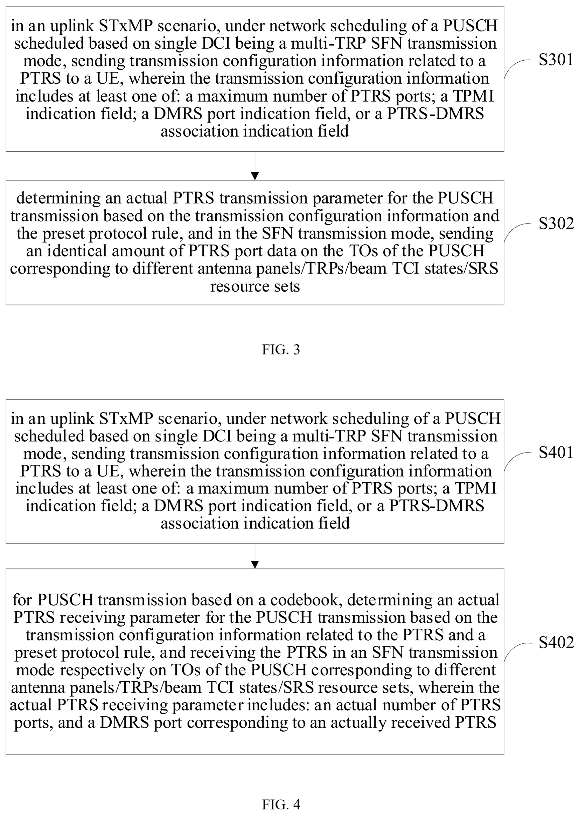

FIG. 3 is a flow chart illustrating a method for controlling uplink transmission according to an embodiment of the disclosure. As shown in FIG. 3, the method may be performed by a UE and may include the following steps 301 to 302.

At S301, in an uplink STxMP scenario, under network scheduling of a PUSCH scheduled based on single DCI being a multi-TRP SFN transmission mode, transmission configuration information related to a PTRS sent by a network device is received, in which the transmission configuration information includes at least one of: a maximum number of PTRS ports; a TPMI indication field; a DMRS port indication field, or a PTRS-DMRS association indication field.

In some embodiments of the disclosure, whether the PTRS is transmitted in uplink is also controlled via configuration of a higher layer parameter. The UE may obtain the maximum number of PTRS ports by receiving a RRC signaling sent by the network device. For example, the maximum number of PTRS ports maxNrofPorts configured by the RRC signaling is equal to 1 or 2.

If phaseTrackingRS is not configured for the UE in the higher layer parameter DMRS-UplinkConfig, the UE does not transmit the PTRS in uplink. If the parameter UL-PTRS-present is configured for the UE by the higher layer and the number of PTRS ports is 1 or 2, then a PTRS-DMRS association indication field in UL DCI0_1/0_2 indicates that one DMRS port is associated with this PTRS port. The maximum number of PTRS ports is obtained by configuring maxNrofPorts in the higher layer parameter PTRS-UplinkConfig as 'n2'. If the indicated maximum number of PTRS ports is 2, the DMRS ports corresponding to the SRS resources on the network side are divided into two groups, and the two DMRS port groups are respectively associated with the two PTRS ports.

In some embodiments of the disclosure, the transmission configuration information includes the DMRS port indication field. The DMRS field in the DCI may indicate DMRS port information used for the PUSCH transmission in each beam direction. For example, if indicated DMRS ports are {0,1} and a corresponding transmission scheme is FDM transmission or SFN transmission, then the DMRS ports for the PUSCH transmission in each beam direction use the ports {0,1}, i.e., transmission rank indicator (TRI) is equal to 2. For example, when the corresponding indicated DMRS ports are {0,1} and the corresponding transmission scheme is the SDM transmission, the DMRS ports corresponding to the PUSCH transmission in each TCI beam direction may also be determined based on a predefined rule. A possible port allocation is that, the DMRS port used for the PUSCH transmission in a first beam direction is {0}, and the corresponding TRI is 1, and the DMRS port used for the PUSCH transmission in a second beam direction is {1}, and the corresponding TRI is 1.

In the disclosure, DMRS ports or DMRS port groups corresponding to the TOs of the PUSCH that are associated with and correspond to different antenna panels/TRPs/beam TCI states/SRS resource sets are identical.

That is, for CB PUSCH (i.e., the PUSCH based on the codebook), the DMRS ports/port groups that are associated with different SRS resource sets and are indicated by the DMRS port indication field are identical. TPMI 1/TPMI 2 are respectively associated with first/second SRS resource sets corresponding to different panels/TRPs/TCI. That is, a corresponding relationship between the TPMIs and the SRS resource sets may be the TPMI 1 corresponding to the first SRS resource set, or the TPMI 1 corresponding to the second SRS resource set. In some embodiments of the disclosure, different SRS resource sets are associated with PUSCH transmissions on multiple antenna panels. A corresponding relationship between different SRS resource sets and SRI/TPMI indication fields is indicated by an SRS resource set indicator indication field.

The SRS resource set indicator indication field dynamically indicate scheduling for single TRP (STRP) transmission and multi-TRP (MTRP) transmission.

In the STRP, the first SRI/TPMI field may be associated with any SRS resource. Specifically, the SRS resource set indicator indication field uses different codepoints to perform dynamical switch indication between the STRP and the MTRP. As shown in Table 1 below.

Table 1

| codebook | SRS resource set | SRI field (transmission based on a codebook or a non-codebook)/ TPMI field(transmission based on a codebook) |
|---|---|---|
| 00 | S-TRP transmission mode, configuring first SRS resource set (first TRP) | first SRI/TPMI field |
| 01 | S-TRP transmission mode, | first SRI/TPMI field |

(continued)

| codebook | SRS resource set | SRI field (transmission based on a codebook or a non-codebook)/ TPMI field(transmission based on a codebook) |
|---|---|---|
| | configuring second SRS resource set (second TRP) | |
| 10 | M-TRP transmission mode (in order of TRP1, TRP2) first SRI/TPMI field corresponding to first SRS resource set second SRI/TPMI field corresponding to second SRS resource set | first SRI/TPMI field and second SRI/TPMI field |
| 11 | M-TRP transmission mode (in order of TRP2, TRP1) first SRI/TPMI field corresponding to first SRS resource set second SRI/TPMI field corresponding to second SRS resource set | first SRI/TPMI field and second SRI/TPMI field |

That is, different SRS resource sets may be associated with PUSCH transmissions on multiple panels/TRPs/-beam TCI states. The corresponding relationship between the SRS resource sets and the TPMI/SRI fields is defined by the SRS resource set indicator indication field. The current protocol in R17 defines that the first TPMI field corresponds to the first SRS resource set, and the second TPMI field corresponds to the second SRS resource set. In R18, a specific corresponding relationship may be the first TPMI field corresponding to the first SRS resource set, or the first TPMI field corresponding to the second SRS resource set.

In an embodiment of the disclosure, a codebook preconfiguration table may be determined based on a codebook parameter configuration and a codebook subset restriction of the PUSCH transmissions on multiple panels in corresponding beam directions. A number of bits occupied by each TPMI indication field is determined based on a number of available TPMI combinations in the codebook preconfiguration table.

In the embodiment, if the TCI beam indication information carried in the single DCI sent by the network device to the UE indicates two or more beams and the transmission configuration information includes two or more TPMI indication fields, then the single DCI is used for the multi-antenna panel multi-TRP transmission, and the multi-antenna panel multi-TRP transmission is the PUSCH transmission based on the codebook. The PUSCH transmission based on the codebook in each beam direction corresponds to a TPMI indication field, that is, one TPMI indication field may indicate a precoding matrix for the PUSCH transmission based on the codebook in one beam direction. The network device may determine the codebook parameter configuration and the codebook subset restriction for the PUSCH transmission in each beam direction, thus determining the codebook preconfiguration table for the PUSCH transmission in each beam direction. Each TPMI indication field included in the transmission configuration information carried in the DCI sent by the network device to the UE may carry an index, in which the index simultaneously indicates the TPMI and the TRI based on the codebook preconfiguration table. The number of bits occupied by each TPMI indication field is determined based on the number of available TPMI combinations in the corresponding codebook preconfiguration table.

The codebook parameter configuration may configure a number of antenna ports, whether to use transform precoding, and maxRank. The codebook subset restrictions include three types: fully coherent, partial coherent and non-coherent; partial coherent and non-coherent; and non-coherent.

Other explanations for step S201 in the above embodiments also apply to step S301 in the embodiment with the same principles, which will not be described here.

At S302, for PUSCH transmission based on a codebook, in the multi-TRP SFN transmission mode of the PUSCH, an actual PTRS transmission parameter for the PUSCH transmission is determined based on the transmission configuration information and a preset protocol rule, and an identical amount of PTRS port data is sent on the TOs of the PUSCH corresponding to different antenna panels/TRPs/beam TCI states/SRS resource sets.

That is, in the solution of the disclosure, the corresponding relationship between PTRS ports and DMRS ports corresponding to the TPMI field that determines the number of PTRS ports may be used and applied to the PTRS transmission on two panels, that is, a corresponding PTRS is sent on the identical DMRS ports.

In some embodiments of the disclosure, the actual PTRS transmission parameters include an actual number of PTRS ports, and a DMRS port corresponding to the actually transmitted PTRS. The actual number of PTRS ports is less than or equal to the maximum number of PTRS ports.

In some embodiments of the disclosure, each PTRS port data is identical and sent via one or more identical DMRS ports. That is, the DMRS ports or DMRS port groups indicated by the DMRS port indication fields corresponding to different SRS resource sets corresponding to different antenna panels are identical, thus achieving the multi-TRP SFN transmission.

In some optional embodiments, determining the actual PTRS transmission parameter for the PUSCH transmission based on the transmission configuration information related to the PTRS and the preset protocol rule, and sending the PTRS in the SFN transmission mode respectively on the TOs of the PUSCH corresponding to different antenna panels/TRPs/beam TCI states/SRS resource sets specifically includes: in response to different numbers of PTRS ports actually corresponding to precoders indicated by different TPMI indication fields, determining the actual PTRS transmission parameter based on the maximum number of PTRS ports, an association relationship between PTRS-DMRS ports indicated by the PTRS-DMRS association indication field and the preset protocol rule; and sending the PTRS in the SFN transmission mode respectively on the TOs of the PUSCH corresponding to different antenna panels/TRPs/beam TCI states/SRS resource sets based on the actual PTRS transmission parameter.

That is, when the number of PTRS ports actually corresponding to a precoder indicated by the TPMI1 is N1, and the number of PTRS ports actually corresponding to a precoder indicated by the TPMI2 is N2, the actual number N of PTRS ports corresponding to the PUSCH is determined by the preset protocol rule.

The preset protocol rule is described in detail below. In some optional embodiments of the disclosure, preset protocol rules include any one of the following manners.

In an optional manner, the actual number of PTRS ports is a number of PTRS ports corresponding to a preset TPMI, the preset TPMI is one among TPMIs that are associated with and correspond to different antenna panels/TRPs/-beam TCI states/SRS resource sets/TOs of the PUSCH, and the actual number of PTRS ports determined and the DMRS port used by the actually transmitted PTRS port are simultaneously applied on the TOs of the PUSCH corresponding to different antenna panels/TRPs/beam TCI states/SRS resource sets. The preset TPMI is one among TPMIs that are associated with and correspond to different antenna panels/TRPs/beam TCI states/SRS resource sets/TOs of the PUSCH, and the determined actual number of PTRS ports and the DMRS port used by the actually transmitted PTRS port are simultaneously applied on the TOs of the PUSCH corresponding to different antenna panels/TRPs/beam TCI states/SRS resource sets. That is, N is determined by the number of PTRS ports corresponding to a fixed TPMI field, such as determined by the TPMI1 indication field, in which N is equal to N1, and the actual number of PTRS ports determined and the DMRS port used by the actually transmitted PTRS port are simultaneously applied to different panels.

That is, the actual number of PTRS ports determined via the above rules is N, and each PTRS port specifically corresponds to DMRS ports. In this case, the actual number of PTRS ports sent on each TO of the PUSCH is N, and the DMRS ports corresponding to each PTRS port are identical, thus achieving the SFN transmission of the PTRS.

The preset TPMI is one among TPMIs that are associated with and correspond to different antenna panels/TRPs/beam TCI states/SRS resource sets/TOs of the PUSCH. Which TPMI takes effect may be specified through predefinition or network configuration. It should be understood that in some optional embodiments of the disclosure, the TPMIs that are associated with and correspond to different antenna panels/TRPs/beam TCI states/SRS resource sets/TOs of the PUSCH may be different, which will not be described in the disclosure.

In another optional manner, the actual number of PTRS ports is a minimum value among numbers of PTRS ports corresponding to TPMIs that are associated with and correspond to different antenna panels/TRPs/beam TCI states/SRS resource sets/TOs of the PUSCH, and the actual number of PTRS ports determined and the DMRS port used by the actually transmitted PTRS port are simultaneously applied on the TOs of the PUSCH corresponding to different antenna panels/TRPs/beam TCI states/SRS resource sets. That is, N equals the smaller value of the numbers of PTRS ports corresponding to the TPMI 1/TPMI 2, i.e., min{N1,N2}, and the actual number of PTRS ports determined and the DMRS port used by the actually transmitted PTRS port are simultaneously applied to different panels.

In another optional manner, the actual number of PTRS ports is a maximum value among numbers of PTRS ports corresponding to TPMIs that are associated with and correspond to different antenna panels/TRPs/beam TCI states/SRS resource sets/TOs of the PUSCH, and the actual number of PTRS ports determined and the DMRS port used by the actually transmitted PTRS port are simultaneously applied on the TOs of the PUSCH corresponding to different antenna panels/TRPs/beam TCI states/SRS resource sets. That is, N equals the larger value of the numbers of PTRS ports corresponding to the TPMI 1/TPMI 2, i.e., max{N1,N2}, and the actual number of PTRS ports determined and the DMRS port used by the actually transmitted PTRS port are simultaneously applied to different panels.

The disclosure does not limit other manners beyond the above optional manners.

The PTRS-DMRS association indication is described in detail below. First, the contents in relevant protocols are described to facilitate understanding of the PTRS-DMRS association indication defined in this disclosure.

For PDSCH/PUSCH channels, a data layer of data transmission corresponds to a DMRS port used for demodulation. A DMRS design for data channels (PDSCH/PUSCH) in NR systems mainly includes designs of a front-load DMRS and an additional DMRS. For low-mobility scenarios, the front-load DMRS may achieve channel estimation performance meeting demodulation requirements with low overheads. Depending on a number of orthogonal ports used for transmission, the front-load DMRS may be configured with up to two OFDM symbols. However, a maximum mobility speed considered in the NR system is 500km/h. Facing the mobility with such a large dynamic range, in addition to the front-load DMRS, in a medium/high-speed scenario, more DMRS symbols is required to be inserted within the scheduling duration to meet the estimation accuracy for the channel time variation. The relevant protocols have defined DMRS port allocation tables for different uplink parameter configurations. For different DMRS types (1 or 2), symbol lengths, numbers of data layers, using or not using transform precoding (e.g., dmrs-Type=1, maxLength=1, rank=1, transform precoder is disabled, which represents the DMRS type 1, the single symbol, the single-stream transmission, not using the transform precoding), the DMRS port may be allocated based on Table 7.3.1.1.2-8 to Table 7.3.1.1.2-23, as shown in Tables 2 to 17 below, which is not described here.

Table 2

| (Table 7.3.1.1.2-8: Antenna port(s), transform precoder is disabled, dmrs-Type=1, maxLength=1, rank = 1) | | |
| --- | --- | --- |
| Value | Number of DMRS CDM group(s) without data | DMRS port(s) |
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

Table 3

| (Table 7.3.1.1.2-9: Antenna port(s), transform precoder is disabled, dmrs-Type=1, maxLength=1, rank = 2) | | |
| --- | --- | --- |
| Value | Number of DMRS CDM group(s) without data | DMRS port(s) |
| 0 | 1 | 0,1 |
| 1 | 2 | 0,1 |
| 2 | 2 | 2,3 |
| 3 | 2 | 0,2 |
| 4-7 | Reserved | Reserved |

Table 4

| (Table 7.3.1.1.2-10: Antenna port(s), transform precoder is disabled, dmrs-Type=1, maxLength=1, rank = 3) | | |
| --- | --- | --- |
| Value | Number of DMRS CDM group(s) without data | DMRS port(s) |
| 0 | 2 | 0-2 |
| 2-7 | Reserved | Reserved |

Table 5

| (Table 7.3.1.1.2-11: Antenna port(s), transform precoder is disabled, dmrs-Type=1, maxLength=1, rank = 4) | | |
| --- | --- | --- |
| Value | Number of DMRS CDM group(s) without data | DMRS port(s) |
| 0 | 2 | 0-3 |
| 2-7 | Reserved | Reserved |

Table 6

| (Table 7.3.1.1.2-12: Antenna port(s), transform precoder is disabled, dmrs-Type=1, maxLength=2, rank = 1) | | | |
| --- | --- | --- | --- |
| Value | Number of DMRS CDM group(s) without data | DMRS port(s) | Number of front-load symbols |
| 0 | 1 | 0 | 1 |
| 1 | 1 | 1 | 1 |

(continued)

| (Table 7.3.1.1.2-12: Antenna port(s), transform precoder is disabled, dmrs-Type=1, maxLength=2, rank = 1) | | | |
|---|---|---|---|
| Value | Number of DMRS CDM group(s) without data | DMRS port(s) | Number of front-load symbols |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14-15 | Reserved | Reserved | Reserved |

Table 7

| (Table 7.3.1.1.2-13: Antenna port(s), transform precoder is disabled, dmrs-Type=1, maxLength=2, rank = 2) | | | |
|---|---|---|---|
| Value | Number of DMRS CDM group(s) without data | DMRS port(s) | Number of front-load symbols |
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-15 | Reserved | Reserved | Reserved |

Table 8

| (Table 7.3.1.1.2-14: Antenna port(s), transform precoder is disabled, dmrs-Type=1, maxLength=2, rank = 3) | | | |
|---|---|---|---|
| Value | Number of DMRS CDM group(s) without data | DMRS port(s) | Number of front-load symbols |
| 0 | 2 | 0-2 | 1 |
| 1 | 2 | 0,1,4 | 2 |
| 2 | 2 | 2,3,6 | 2 |
| 3-15 | Reserved | Reserved | Reserved |

Table 9

| (Table 7.3.1.1.2-15: Antenna port(s), transform precoder is disabled, dmrs-Type=1, maxLength=2, rank = 4) | | | |
|---|---|---|---|
| Value | Number of DMRS CDM group(s) without data | DMRS port(s) | Number of front-load symbols |
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| 4-15 | Reserved | Reserved | Reserved |

Table 10

| (Table 7.3.1.1.2-16: Antenna port(s), transform precoder is disabled, dmrs-Type=2, maxLength=1, rank=1) | | |
|---|---|---|
| Value | Number of DMRS CDM group(s) without data | DMRS port(s) |
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

Table 11

| (Table 7.3.1.1.2-17: Antenna port(s), transform precoder is disabled, dmrs-Type=2, maxLength=1, rank=2) | | |
|---|---|---|
| Value | Number of DMRS CDM group(s) without data | DMRS port(s) |
| 0 | 1 | 0,1 |
| 1 | 2 | 0,1 |
| 2 | 2 | 2,3 |
| 3 | 3 | 0,1 |
| 4 | 3 | 2,3 |
| 5 | 3 | 4,5 |
| 6 | 2 | 0,2 |
| 7-15 | Reserved | Reserved |

Table 12

| (Table 7.3.1.1.2-18: Antenna port(s), transform precoder is disabled, dmrs-Type=2, maxLength=1, rank =3) | | |
|---|---|---|
| Value | Number of DMRS CDM group(s) without data | DMRS port(s) |
| 0 | 2 | 0-2 |

(continued)

| (Table 7.3.1.1.2-18: Antenna port(s), transform precoder is disabled, dmrs-Type=2, maxLength=1, rank =3) | | |
|---|---|---|
| Value | Number of DMRS CDM group(s) without data | DMRS port(s) |
| 1 | 3 | 0-2 |
| 2 | 3 | 3-5 |
| 3-15 | Reserved | Reserved |

Table 13

| (Table 7.3.1.1.2-19: Antenna port(s), transform precoder is disabled, dmrs-Type=2, maxLength=1, rank =4) | | |
|---|---|---|
| Value | Number of DMRS CDM group(s) without data | DMRS port(s) |
| 0 | 2 | 0-3 |
| 1 | 3 | 0-3 |
| 2-15 | Reserved | Reserved |

Table 14

| (Table 7.3.1.1.2-20: Antenna port(s), transform precoder is disabled, dmrs-Type=2, maxLength=2, rank=1) | | | |
|---|---|---|---|
| Value | Number of DMRS CDM group(s) without data | DMRS port(s) | Number of front-load symbols |
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |

(continued)

| Value | Number of DMRS CDM group(s) without data | DMRS port(s) | Number of front-load symbols |
|---|---|---|---|
| (Table 7.3.1.1.2-20: Antenna port(s), transform precoder is disabled, dmrs-Type=2, maxLength=2, rank=1) | | | |
| Value | Number of DMRS CDM group(s) without data | DMRS port(s) | Number of front-load symbols |
| 25 | 1 | 1 | 2 |
| 26 | 1 | 6 | 2 |
| 27 | 1 | 7 | 2 |
| 28-31 | Reserved | Reserved | Reserved |

Table 15

| (Table 7.3.1.1.2-21: Antenna port(s), transform precoder is disabled, dmrs-Type=2, maxLength=2, rank=2) | | | |
|---|---|---|---|
| Value | Number of DMRS CDM group(s) without data | DMRS port(s) | Number of front-load symbols |
| 0 | 1 | 0,1 | 1 |
| 1 | 2 | 0,1 | 1 |
| 2 | 2 | 2,3 | 1 |
| 3 | 3 | 0,1 | 1 |
| 4 | 3 | 2,3 | 1 |
| 5 | 3 | 4,5 | 1 |
| 6 | 2 | 0,2 | 1 |
| 7 | 3 | 0,1 | 2 |
| 8 | 3 | 2,3 | 2 |
| 9 | 3 | 4,5 | 2 |
| 10 | 3 | 6,7 | 2 |
| 11 | 3 | 8,9 | 2 |
| 12 | 3 | 10,11 | 2 |
| 13 | 1 | 0,1 | 2 |
| 14 | 1 | 6,7 | 2 |
| 15 | 2 | 0,1 | 2 |
| 16 | 2 | 2,3 | 2 |
| 17 | 2 | 6,7 | 2 |
| 18 | 2 | 8,9 | 2 |
| 19-31 | Reserved | Reserved | Reserved |

Table 16

| (Table 7.3.1.1.2-22: Antenna port(s), transform precoder is disabled, dmrs-Type=2, maxLength=2, rank=3) | | | |
|---|---|---|---|
| Value | Number of DMRS CDM group(s) without data | DMRS port(s) | Number of front-load symbols |
| 0 | 2 | 0-2 | 1 |
| 1 | 3 | 0-2 | 1 |
| 2 | 3 | 3-5 | 1 |
| 3 | 3 | 0,1,6 | 2 |
| 4 | 3 | 2,3,8 | 2 |
| 5 | 3 | 4,5,10 | 2 |

(continued)

| (Table 7.3.1.1.2-22: Antenna port(s), transform precoder is disabled, dmrs-Type=2, maxLength=2, rank=3) | | | |
|---|---|---|---|
| Value | Number of DMRS CDM group(s) without data | DMRS port(s) | Number of front-load symbols |
| 6-31 | Reserved | Reserved | Reserved |

Table 17

| (Table 7.3.1.1.2-23: Antenna port(s), transform precoder is disabled, dmrs-Type=2, maxLength=2, rank=4) | | | |
|---|---|---|---|
| Value | Number of DMRS CDM group(s) without data | DMRS port(s) | Number of front-load symbols |
| 0 | 2 | 0-3 | 1 |
| 1 | 3 | 0-3 | 1 |
| 2 | 3 | 0,1,6,7 | 2 |
| 3 | 3 | 2,3,8,9 | 2 |
| 4 | 3 | 4,5,10,11 | 2 |
| 5-31 | Reserved | Reserved | Reserved |

However, port characteristics of the PTRS and the DMRS are correlated. When there are a plurality of DMRS ports, it is necessary to specify which DMRS port(s) share identical port parameters with a given PTRS port, that is, the association relationship between the PTRS port and the DMRS port is specified by the PTRS-DMRS association indication field.

The number of PTRS ports is related to the number of phase noise sources. When there are a plurality of independent phase noise sources, each phase noise source requires a PTRS port for phase estimation. Thus, NR15/16 supports one PTRS port in downlink and two PTRS ports in uplink. Whether the PTRS is transmitted in uplink may be controlled by configuration of a higher layer parameter. If there is no phaseTrackingRS configured for the UE in the higher layer parameter DMRS-UplinkConfig, the UE does not transmit the PTRS in uplink. If there is no phaseTrackingRS configured for the UE in the higher layer parameter DMRS-UplinkConfig, the UE does not transmit the PTRS in uplink. If the parameter UL-PTRS-present is configured for the UE by the higher layer and the number of PTRS ports is 1 or 2, then the PTRS-DMRS association indication field in UL DCI0_1/0_2 indicates that one DMRS port is associated with this PTRS port.

The specific association relationship is shown in the tables below.

Table 18 below shows the case for a single PTRS port (refer to Table 7.3.1.1.2-25: PTRS-DMRS association for UL PTRS port 0 in the protocol).

Table 18

| Value | DMRS port |
|---|---|
| 0 | 1st scheduled DMRS port |
| 1 | 2nd scheduled DMRS port |
| 2 | 3rd scheduled DMRS port |
| 3 | 4th scheduled DMRS port |

R17 introduced a definition of the association relationship between the PTRS ports and the DMRS ports in different TRP directions corresponding to an indicated data transmission layer RANK is equal to 2, as shown in Table 19 below (refer to Table 7.3.1.1.2-25A: PTRS-DMRS association for UL PTRS port 0 or for the actual UL PTRS port in the protocol). A least significant bit (LSB) and a most significant bit (MSB) indicate association relationships between the PTRS ports and the DMRS ports in different directions.

Table 19

| Value of MSB | DMRS port | Value of LSB | DMRS port |
|---|---|---|---|
| 0 | 1st scheduled DMRS port corresponding to SRS resource indicator field and/or Precoding information and number of layers field | 0 | 1st scheduled DMRS port corresponding to Second SRS resource indicator field and/or Second Precoding information field |
| 1 | 2nd scheduled DMRS port corresponding to SRS resource indicator field and/or Precoding information and number of layers field | 1 | 2nd scheduled DMRS port corresponding to Second SRS resource indicator field and/or Second Precoding information field |

Table 20 below shows the case for two PTRS ports (refer to Table 7.3.1.1.2-26: PTRS-DMRS association for UL PTRS ports 0 and 1).

Table 20

| Value of MSB | DMRS port | Value of LSB | DMRS port |
|---|---|---|---|
| 0 | 1st DMRS port which shares PTRS port 0 | 0 | 1st DMRS port which shares PTRS port 1 |
| 1 | 2nd DMRS port which shares PTRS port 0 | 1 | 2nd DMRS port which shares PTRS port 1 |

In some optional embodiments of the disclosure, in response to a data transmission layer RANK being equal to 1, the PTRS-DMRS association indication field is null, the PTRS is actually sent via a single port respectively on different TOs of the PUSCH, and an indicated DMRS port is used for sending the PTRS. That is, the data transmission layer RANK of the DMRS transmission is more than one layer. When the RANK is equal to 1, the association relationship between the PTRS ports and the DMRS ports is determined, i.e., the PTRS is directly transmitted on the DMRS port, and no indication is required at this time.

In some optional embodiments of the disclosure, in response to the RANK being greater than or equal to 2 and the actual number of PTRS ports being 1, the DMRS port used by the actually transmitted PTRS port is determined based on the PTRS-DMRS association indication field via one of following manners: indicating two associated DMRS ports with 2 bits (this manner may apply to a case that the TPMI corresponds to a fully coherent codeword); or indicating one of first two DMRS ports or one of DMRS ports sharing an identical PTRS port with 1 bit (this manner may apply to a case that the TPMI corresponds to a partially coherent codeword).

Accordingly, the UE may determine the DMRS port used by the actually transmitted PTRS port based on the PTRS-DMRS association indication field, and send the PTRS using the DMRS port respectively on different TOs of the PUSCH.

That is, when the RANK is greater than or equal to 2 and the number of ports is 1, 2 bits may be used to indicate specific DMRS ports based on Table 2 (see the above Table 7.3.1.1.2-25); or 1 bit may be used to indicate one of the first two DMRS ports or one of DMRS ports sharing an identical PTRS port.

In some optional embodiments of the disclosure, in response to the RANK being greater than or equal to 2 and the actual number of PTRS ports for PUSCH transmission being 2, the DMRS port used by the actually transmitted PTRS port is determined based on the PTRS-DMRS association indication field via one of following manners: indicating two associated DMRS ports with 2 bits (this manner may apply to the case that the TPMI corresponds to the fully coherent codeword); or indicating only one of first two DMRS ports or only one of two DMRS ports sharing an identical PTRS port with 1 bit (this manner may apply to the case that the TPMI corresponds to the partially coherent codeword).

Accordingly, the UE may determine a first DMRS port corresponding to a first actually transmitted PTRS port on the TOs of the PUSCH corresponding to different antenna panels/TRPs/beam TCI states/SRS resource sets based on the PTRS-DMRS association indication field, determine a second DMRS port corresponding to a second actually transmitted PTRS port on the TOs of the PUSCH corresponding to different antenna panels/TRPs/beam TCI states/SRS resource sets based on a default rule, and send the PTRS respectively via the first DMRS port and the second DMRS port.

In this case, the PTRS port 0 (i.e., the actually transmitted PTRS port 0) means the first PTRS port actually transmitted, the PTRS port 1 (i.e., the actually transmitted PTRS port 1) means the second PTRS port actually transmitted.

The DMRS port determined based on the default rule is any one of: the other of first two DMRS ports; any one of other DMRS ports when the RANK is greater than 2; or any one of the two DMRS ports sharing the identical PTRS port.

That is, when the RANK is greater than or equal to 2 and the number of ports is 2, 2 bits may be used to indicate specific DMRS ports based on Table 4 (see the above Table 7.3.1.1.2-26); or 1 bit may be used to indicate only one of the first two DMRS ports, or only one of the first two DMRS ports sharing an identical PTRS port; the other PTRS port is sent based on the default rule, for example, the other of first two DMRS ports, or the first of other DMRS ports when the RANK is greater than 2, or the first of two DMRS ports fixedly sharing the identical PTRS port. The disclosure is not limited here.

In some embodiments of the disclosure, when determining the DMRS port associated with the PTRS, the DMRS port associated with the PTRS is determined via respective TPMIs corresponding to respective antenna panels/TRPs/-beam TCI states/SRS resource sets/TOs of the PUSCH determined based on the preset protocol rule, and identical PTRS ports are sent respectively via identical DMRS ports simultaneously on the TOs of the PUSCH corresponding to different antenna panels/TRPs/beam TCI states/SRS resource sets.

In some embodiments of the disclosure, the maximum number of PT-RS ports is obtained by configuring maxNrofPorts as 'n2' in the higher layer parameter PTRS-UplinkConfig. If the indicated maximum number of PTRS ports is 2, the DMRS ports corresponding to the SRS resources on the network side are divided into two groups, and the two DMRS port groups are respectively associated with the two PTRS ports based on the above rules.

In an embodiment of the disclosure, during the R16 study phase, transmission enhancement for the PDSCH is performed based on application of multi-point coordinated transmission technology among downlink multiple TRPs/ antenna panels. Since the data transmission includes scheduling feedbacks for uplink and downlink channels, downlink data channel enhancement alone cannot guarantee the overall service performance in Ultra-Reliable and Low-Latency Communication (URLLC) studies. In R17 studies, the enhancement is continued for the downlink control channel PDCCH, the uplink control channel PUCCH and the uplink data channel PUSCH.

Phase noise (PN) is caused by the execution of a local oscillator that destroys the orthogonality between subcarriers in an OFDM system. This causes the CPE, which in turn causes modulation constellations to rotate at a fixed angle, and inter-carrier interference (ICI). The ICI causes scattering of constellation points. This phenomenon is more pronounced at high frequencies. Since the impact of the CPE is greater, NR primarily considers compensation for the CPE. In NR, the PTRS signal is designed for CPE estimation. To enhance the signal coverage and improve the signal quality, the PTRS is configured by the network for the terminal as a UE-specific reference signal. The PTRS is used to track the phase noise introduced by local oscillators in gNB and the UE. The PTRS may be regarded as an extension of DMRS, and has close relationships with the DMRS such as adopting the same precoding, port association, orthogonal sequence generation, and QCL relationships.

The number of PTRS ports relates to the number of phase noise sources. When there are a plurality of independent phase noise sources, each phase noise source requires a PTRS port for phase estimation of the phase noise source.

That is, for codebook-based cases, which DMRS corresponding to a different layer in the codebook indicated in the TPMI may be determined based on the above tables. The DMRS port indication field of the SRS resource set indicates a group of DMRS ports used for demodulation in the PUSCH transmission, and the UE performs transmission based on an indication of the base station. However, for multi-panel scenarios, since TPMIs corresponding to different panels are different, port groupings for codewords actually corresponding to the TPMIs are also different. For example, if the codeword on one of the panels corresponds to a fully coherent codeword and the corresponding PTRS port is 1, while the codeword on another panel corresponds to the PTRS port 2, then the PTRS is sent according to the PTRS port 1 on one panel and according to the PTRS port 2 on the other panel. If the network configures uplink transmission in the SFN transmission mode, the DMRS ports for transmissions on both panels belong to an identical group, i.e., the PUSCH sent on the panel 0 and the PUSCH sent on the panel 1 use the identical group of DMRS ports. As such, there is a clear contradictory. For uplink simultaneous transmission in the SFN transmission mode, all reference signals and data remain consistent. When inconsistent PTRS ports indicated by different TPMIs occur in the current protocol, application of the above solution in the disclosure may effectively resolve this contradictory.

In summary, the above solution of this disclosure may resolve the case that the actual number of PTRS ports corresponding to different TPMIs indicated by the network device are inconsistent, and achieve the enhanced indication for the PTRS transmission in the SFN transmission mode, thus supporting CPE estimation of the terminal with multi-panel under a codebook-based configuration in the SFN scheme for STxMP, so that multi-point coordinated transmission becomes more effective, the reliability and throughput of data transmission are effectively improved.

Further, application of multi-TRP/multi-panel of the base station mainly aims to improve the cell-edge coverage, provide more balanced quality of service within the service area, and transmit data cooperatively among the multiple TRPs/panels in different ways. From a network architecture perspective, network deployment with a large number of distributed access points plus centralized baseband processing is more conducive to providing balanced user experience rates and significantly reducing the delay and signaling overhead caused by handovers. Utilizing the coordination among the multiple TRPs/panels, transmitting/receiving channels via a plurality of beams from a plurality of angles may better overcome various kinds of shadowing/blocking, ensure the robustness of link connections, and is suitable for URLLC services to improve the transmission quality and meet the reliability requirements.

FIG. 4 is a flow chart illustrating a method for controlling uplink transmission according to an embodiment of the disclosure. As shown in FIG. 4, the method may be performed by a network device.

For the network device, in NR, for PUSCH transmission based on a codebook, with regard to a plurality of SRS resources configured for the terminal in a SRS resource set, the network side feeds back an SRS resource indicator (SRI) of a certain number $\lceil \log_2(N_{SRS}) \rceil$ of bits, and selects the SRS resources via the indication of the SRI. The network device determines the actually transmitted precoding matrix TPMI and the actually transmitted rank indicator (RI) used by the terminal based on uplink channel state information (CSI) measurement, which are configured for and notified to the terminal via the TPMI indication field. Typically, the terminal needs to precode data in subsequent uplink transmissions using the TPMI and RI specified by the network side. Simultaneously, the precoded data is mapped to corresponding antenna ports based on spatial direction indication information (spatial filter SpatialRelationInfo) corresponding to SRS resources indicated by the SRI. Different SRSs are transmitted using different spatial filters. Thus, the precoded data of the terminal needs to be filtered by the spatial filter used by the SRS indicated by the SRI. In this way, uplink data transmission from a single layer to full rank may be supported.

Table 21 shows an example of an indication method of the SRI for the plurality of SRS resources in the PUSCH transmission based on the codebook. Table 22 shows examples of signaling indication methods for TPMI and RI in single-layer transmission taking 4 antenna ports as an example and indications for different UE capabilities (i.e., configuration for 4 antenna ports and RANK being equal to 1: precoding information TPMI and transmission rank RI (for the cases using DFTs-OFDM precoding, and the cases without using DFTs-OFDM precoding with the RANK being equal to 1)). In this case, UE capabilities are divided into three types: fully coherent, partially coherent, and non-coherent, which represent the correlation capability of antenna ports. Table 23 exemplarily shows codewords for single-layer transmission with 4 antenna ports (4-antenna single-stream codebook under uplink DFT-S-OFDM waveform).

Table 21

| Bit field mapped to index | SRI(s), $N_{SRS} = 2$ |
|---|---|
| 0 | 0 |
| 1 | 1 |

Table 22

| Bit field mapped to index | codebookSubset = fullyAndPartialAndNonCoherent | Bit field mapped to index | codebookSubset= partialAndNonCoheren t | Bit field mapped to index | codebookSubset= nonCoherent |
|---|---|---|---|---|---|
| 0 | 1 laver: TPMI=0 | 0 | 1 laver: TPMI=0 | 0 | 1 laver: TPMI=0 |
| 1 | 1 laver: TPMI=1 | 1 | 1 laver: TPMI=1 | 1 | 1 laver: TPMI=1 |
| ... | ... | ... | ... | ... | ... |
| 3 | 1 laver: TPMI=3 | 3 | 1 laver: TPMI=3 | 3 | 1 laver: TPMI=3 |
| 4 | 1 laver: TPMI=4 | 4 | 1 laver: TPMI=4 | | |
| ... | ... | ... | ... | | |
| 11 | 1 layer: TPMI=11 | 11 | 1 layer: TPMI=11 | | |
| 12 | 1 lavers: TPMI=12 | 12-15 | reserved | | |
| ... | ... | | | | |
| 27 | 1 layers: TPMI=27 | | | | |
| 28-31 | reserved | | | | |

Table 23

| TPMI index | W (ordered from left to right in increasing order of TPMI index) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

For multi-panel scenarios, since TPMIs corresponding to different panels are different, port groupings of codewords actually corresponding to the TPMIs are also different. For example, if the codeword on one of the panels corresponds to a fully coherent codeword and the corresponding PTRS port is 1, while the codeword on another panel corresponds to the PTRS port 2, then the PTRS is sent according to the PTRS port 1 on one panel and according to the PTRS port 2 on the other panel. If the network configures uplink transmission in the SFN transmission mode, the DMRS ports for transmissions on both panels belong to an identical group, i.e., the PUSCH sent on the panel 0 and the PUSCH sent on the panel 1 use the identical group of DMRS ports. As such, there is a clear contradictory if the UE performs transmission based on the indication of the base station. For uplink simultaneous transmission in the SFN transmission mode, all reference signals and data remain consistent. When inconsistent PTRS ports indicated by different TPMIs occur in the current protocol, application of the above solution in the disclosure may effectively resolve this conflict.

In the above solution provided in the disclosure, as shown in FIG. 4, the method may include the following steps S401 to S402.

At S401, in an uplink STxMP scenario, under network scheduling of a PUSCH scheduled based on single DCI being a multi-TRP SFN transmission mode, transmission configuration information related to a PTRS is sent to a UE, in which the transmission configuration information includes at least one of: a maximum number of PTRS ports; a TPMI indication field; a DMRS port indication field, or a PTRS-DMRS association indication field.

In the embodiment of the disclosure, the network device may configure the transmission configuration information to the UE. The transmission configuration information may dynamically include two or more groups of DCI information indication fields used for the multi-TRP SFN transmission. Each group of the information indication fields includes at least: the maximum number of PTRS ports, the TPMI indication field, and PTRS-DMRS association indication field. However, the disclosure is not limited here. Each group of the information indication fields may also include other information indication fields.

In some embodiments, TCI beam indication information in the single DCI indicates two or more beams, and the transmission configuration information may include two or more TPMI indication fields. Each TPMI indication field indicates a precoding matrix of the PUSCH transmission in a corresponding beam direction. Then the single DCI is used for the multi-antenna panel multi-TRP transmission, and the multi-antenna panel multi-TRP transmission is the PUSCH transmission based on a codebook. For the PUSCH transmission in each beam direction, a TPMI indication field indicates the precoding matrix used for the PUSCH transmission.

In some embodiments, TCI beam indication information in the single DCI indicates two or more beams, and the transmission configuration information may include two or more SRI indication fields. Each SRI indication field indicates one or more SRS resources carrying precoding information from an SRS resource set allocated for the PUSCH transmission in a corresponding beam direction. Then, the single DCI is used for the multi-antenna panel multi-TRP transmission, and the multi-antenna panel multi-TRP transmission is the PUSCH transmission based on a non-codebook. For the PUSCH transmission in each beam direction, an SRI indication field indicates one or more SRS resources selected from the SRS resource set allocated for the PUSCH transmission. For the PUSCH transmission based on the codebook, a corresponding spatial filter for the PUSCH transmission is selected via the SRI indication, that is, the PUSCH uses spatial relation information (TCI or spatial relation info) corresponding to the SRS resources selected by the SRI as the spatial filter for transmission. For the PUSCH transmission based on the non-codebook, precoding information calculated and recommended by the terminal for the PUSCH is carried in a plurality of SRS resources with a single port in the SRS resource set. Each SRS resource carries the precoding information for one corresponding data layer. The base station performs scheduling selection on the precoding information reported by the terminal through measurement and selects the precoding information via the SRI indication, that is, selects one or more SRS resources from the corresponding SRS resource set. After receiving the SRI indication from the base station, the terminal uses precoding corresponding to one or more SRS resources as precoding used for the PUSCH transmission.

At S402, for PUSCH transmission based on a codebook, an actual PTRS receiving parameter for the PUSCH transmission is determined based on the transmission configuration information related to the PTRS and a preset protocol rule, and the PTRS is received in an SFN transmission mode respectively on TOs of the PUSCH corresponding to different antenna panels/TRPs/beam TCI states/SRS resource sets, in which the actual PTRS receiving parameter includes: an actual number of PTRS ports, and a DMRS port corresponding to an actually received PTRS port.

In an embodiments of the disclosure, the network device and the UE apply the protocol rule described in the disclosure during the uplink transmission. The actual PTRS receiving parameter for the PUSCH transmission is determined based on the transmission configuration information and the preset protocol rule. The network device may receive the PTRS in the SFN transmission mode respectively on TOs of the PUSCH corresponding to different antenna panels/TRPs/beam TCI states/SRS resource sets. The actual PTRS receiving parameter includes but is not limited to: the actual number of PTRS ports, and the DMRS port corresponding to an actually received PTRS.

In an embodiment of the disclosure, the network device may configure the maximum number of PTRS ports for the UE via an RRC signaling. The disclosure is not limited here.

According to the method for controlling uplink transmission provided in the embodiments of the disclosure, in the uplink STxMP scenario, when the PUSCH configured by the network is in the multi-TRP SFN transmission mode, the network device sends the transmission configuration information related to the PTRS sent to the UE. The transmission configuration information includes at least one of: the maximum number of PTRS ports; the TPMI indication field; the DMRS port indication field, or the PTRS-DMRS association indication field. For the PUSCH transmission based on the codebook, the actual PTRS receiving parameter for the PUSCH transmission is determined based on the transmission configuration information related to the PTRS and the preset protocol rule, and the PTRS is received in the SFN transmission mode respectively on TOs of the PUSCH corresponding to different antenna panels/TRPs/beam TCI states/SRS resource sets, in which the actual PTRS receiving parameter includes: the actual number of PTRS ports, and the DMRS port corresponding to the actually received PTRS. The technical solution provided in the disclosure achieves the enhanced indication for the PTRS transmission in the SFN transmission mode, thus supporting CPE estimation of the terminal with multiple panels under a codebook-based configuration in the SFN scheme for STxMP, so that multi-point coordinated transmission becomes more effective, the reliability and throughput of data transmission are effectively improved.

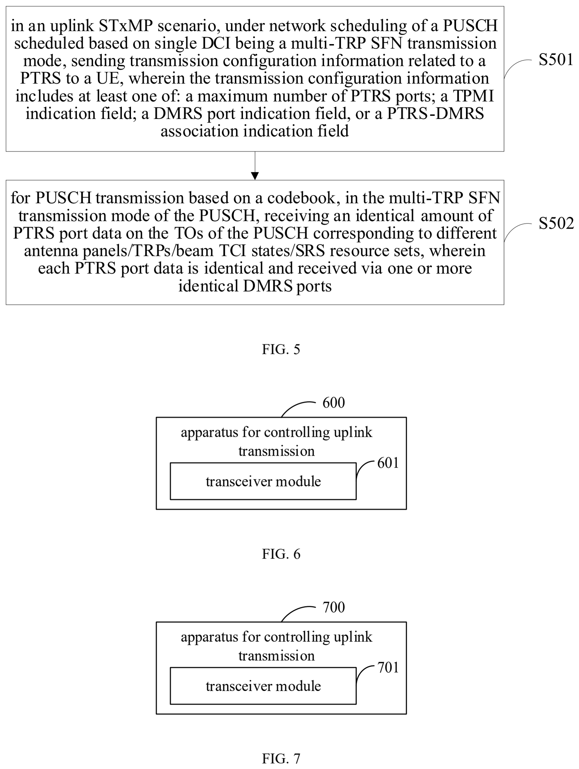

FIG. 5 is a flow chart illustrating a method for controlling uplink transmission according to an embodiment of the disclosure. As shown in FIG. 5, the method may be performed by a network device and may include the following steps 501 to 502.

At S501, in an uplink STxMP scenario, under network scheduling of a PUSCH scheduled based on single DCI being a multi-TRP SFN transmission mode, transmission configuration information related to a PTRS is sent to a UE, in which the transmission configuration information includes at least one of: a maximum number of PTRS ports; a TPMI indication field; a DMRS port indication field, or a PTRS-DMRS association indication field.

In some embodiments of the disclosure, whether the PTRS is transmitted in uplink is also controlled via configuration of a higher layer parameter. The network device may send a RRC signaling to the UE to obtain the maximum number of PTRS ports. For example, the maximum number of PTRS ports maxNrofPorts configured by the RRC signaling is equal to 1 or 2.

If phaseTrackingRS is not configured for the UE in the higher layer parameter DMRS-UplinkConfig, the UE does not transmit the PTRS in uplink. If the parameter UL-PTRS-present is configured for the UE by the higher layer and the number of PTRS ports is 1 or 2, then a PTRS-DMRS association indication field in UL DCI0_1/0_2 indicates that one DMRS port is associated with this PTRS port. The maximum number of PTRS ports is obtained by configuring maxNrofPorts in the higher layer parameter PTRS-UplinkConfig as 'n2'. If the indicated maximum number of PTRS ports is 2, the DMRS ports corresponding to the SRS resources on the network side are divided into two groups, and the two DMRS port groups are respectively associated with the two PTRS ports.

In some embodiments of the disclosure, the transmission configuration information includes the DMRS port indication field. The DMRS field in the DCI may indicate DMRS port information used for the PUSCH transmission in each beam direction. For example, if indicated DMRS ports are {0,1} and a corresponding transmission scheme is FDM transmission or SFN transmission, then the DMRS ports for the PUSCH transmission in each beam direction use the ports {0,1}, i.e., TRI is equal to 2. For example, when the corresponding indicated DMRS ports are {0,1} and the corresponding transmission scheme is the SDM transmission, the DMRS ports corresponding to the PUSCH transmission in each TCI beam direction may also be determined based on a predefined rule. A possible port allocation is that, the DMRS port used for the PUSCH transmission in a first beam direction is {0}, and the corresponding TRI is 1, and the DMRS port used for the PUSCH transmission in a second beam direction is {1}, and the corresponding TRI is 1.

In some embodiments of the disclosure, DMRS ports or DMRS port groups corresponding to the TOs of the PUSCH that are associated with and correspond to different antenna panels/TRPs/beam TCI states/SRS resource sets are identical.

That is, for CB PUSCH, the DMRS ports/port groups that are associated with different SRS resource sets and are indicated by the DMRS port indication field are identical. TPMI 1/TPMI 2 are respectively associated with first/second SRS resource sets corresponding to different panels/TRPs/TCI. That is, a corresponding relationship between the TPMIs and the SRS resource sets may be the TPMI 1 corresponding to the first SRS resource set, or the TPMI 1 corresponding to the second SRS resource set. In some embodiments of the disclosure, different SRS resource sets are associated with PUSCH transmissions on multiple antenna panels. A corresponding relationship between different SRS resource sets and SRI/TPMI indication fields is indicated by an SRS resource set indicator indication field.

The SRS resource set indicator indication field dynamically indicate scheduling for STRP transmission and MTRP transmission.

In the STRP, the first SRI/TPMI field may be associated with any SRS resource. Specifically, the SRS resource set indicator indication field uses different codepoints to perform dynamical switch indication between the STRP and the MTRP. As shown in Table 1 above, which is not described here.

That is, different SRS resource sets may be associated with PUSCH transmissions on multiple panels/TRPs/-beam TCI states. The corresponding relationship between the SRS resource sets and the TPMI/SRI fields is defined by the SRS resource set indicator indication field. The current protocol in R17 defines that the first TPMI field corresponds to the first SRS resource set, and the second TPMI field corresponds to the second SRS resource set. In R18, a specific corresponding relationship may be the first TPMI field corresponding to the first SRS resource set, or the first TPMI field corresponding to the second SRS resource set.

In an embodiment of the disclosure, a codebook preconfiguration table may be determined based on a codebook parameter configuration and a codebook subset restriction of the PUSCH transmissions on multiple panels in corresponding beam directions. A number of bits occupied by each TPMI indication field is determined based on a number of available TPMI combinations in the codebook preconfiguration table.

In the embodiment, if the TCI beam indication information carried in the single DCI sent by the network device to the UE indicates two or more beams and the transmission configuration information includes two or more TPMI indication fields, then the single DCI is used for the multi-antenna panel multi-TRP transmission, and the multi-antenna panel multi-TRP transmission is the PUSCH transmission based on the codebook. The PUSCH transmission based on the codebook in each beam direction corresponds to a TPMI indication field, that is, one TPMI indication field may indicate a precoding matrix for the PUSCH transmission based on the codebook in one beam direction. The network device may determine the codebook parameter configuration and the codebook subset restriction for the PUSCH transmission in each beam direction, thus determining the codebook preconfiguration table for the PUSCH transmission in each beam direction. Each TPMI indication field included in the transmission configuration information carried in the DCI sent by the network device to the UE may carry an index, in which the index simultaneously indicates the TPMI and the TRI based on the codebook preconfiguration table. The number of bits occupied by each TPMI indication field is determined based on the number of available TPMI combinations in the corresponding codebook preconfiguration table.

The codebook parameter configuration may configure a number of antenna ports, whether to use transform precoding, and maxRank. The codebook subset restrictions include three types: fully coherent, partial coherent and non-coherent; partial coherent and non-coherent; and non-coherent.

Other explanations for step S401 in the above embodiments also apply to step S501 in the embodiment with the same principles, which will not be described here.

At S502, for PUSCH transmission based on a codebook, an actual PTRS receiving parameter for the PUSCH transmission is determined based on the transmission configuration information related to the PTRS and a preset protocol rule, and the PTRS is received in an SFN transmission mode respectively on TOs of the PUSCH corresponding to different antenna panels/TRPs/beam TCI states/SRS resource sets, in which the actual PTRS receiving parameter includes: an actual number of PTRS ports, and a DMRS port corresponding to an actually received PTRS.

That is, in the solution of the disclosure, the corresponding relationship between PTRS ports and DMRS ports corresponding to the TPMI field that determines the number of PTRS ports may be used and applied to the PTRS transmission on two panels, that is, a corresponding PTRS is sent on the identical DMRS ports. Accordingly, the network device receives the corresponding PTRS on the identical DMRS port.

In some embodiments of the disclosure, the actual PTRS receiving parameter includes: the actual number of PTRS ports, and the DMRS port corresponding to the actually received PTRS. The actual number of PTRS ports is less than or equal to the maximum number of PTRS ports.

In some embodiments of the disclosure, each PTRS port data is identical and received via one or more identical DMRS ports. That is, the DMRS ports or DMRS port groups indicated by the DMRS port indication fields corresponding to different SRS resource sets corresponding to different antenna panels are identical, thus achieving the multi-TRP SFN transmission and achieving PTRS reception of the network device accordingly.

In some optional embodiments, determining the actual PTRS receiving parameter for the PUSCH transmission based on the transmission configuration information related to the PTRS and the preset protocol rule, and receiving the PTRS in the SFN transmission mode respectively on the TOs of the PUSCH corresponding to different antenna panels/TRPs/beam TCI states/SRS resource sets includes: in response to different numbers of PTRS ports actually corresponding to precoders indicated by different TPMI indication fields, determining the actual PTRS receiving parameter based on the preset protocol rule, and receiving the SFN respectively on the TOs of the PUSCH corresponding to different antenna panels/TRPs/beam TCI states/SRS resource sets.

That is, when the number of PTRS ports actually corresponding to a precoder indicated by the TPMI1 is N1, and the number of PTRS ports actually corresponding to a precoder indicated by the TPMI2 is N2, the actual number N of PTRS ports corresponding to the PUSCH is determined by the preset protocol rule.

The preset protocol rule is described in detail below. In some optional embodiments of the disclosure, preset protocol rules include any one of the following manners.

In an optional manner, the actual number of PTRS ports is a number of PTRS ports corresponding to a preset TPMI, the preset TPMI is one among TPMIs that are associated with and correspond to different antenna panels/TRPs/beam TCI states/SRS resource sets/TOs of the PUSCH, and the actual number of PTRS ports determined and the DMRS port used by the actually transmitted PTRS port are simultaneously applied on the TOs of the PUSCH corresponding to different antenna panels/TRPs/beam TCI states/SRS resource sets. That is, N is determined by the number of PTRS ports corresponding to a fixed TPMI field, such as determined by the TPMI1 indication field, in which N is equal to N1, and the actual number of PTRS ports determined and the DMRS port used by the actually transmitted PTRS port are simultaneously applied to different panels.

The preset TPMI is one among TPMIs that are associated with and correspond to different antenna panels/TRPs/beam TCI states/SRS resource sets/TOs of the PUSCH. Which TPMI takes effect may be specified through predefinition or network configuration.

In another optional manner, the actual number of PTRS ports is a minimum value among numbers of PTRS ports corresponding to TPMIs that are associated with and correspond to different antenna panels/TRPs/beam TCI states/SRS resource sets/TOs of the PUSCH, and the actual number of PTRS ports determined and the DMRS port used by the actually transmitted PTRS port are simultaneously applied on the TOs of the PUSCH corresponding to different antenna panels/TRPs/beam TCI states/SRS resource sets. That is, N equals the smaller value of the numbers of PTRS ports corresponding to the TPMI 1/TPMI 2, i.e., min{N1,N2}, and the actual number of PTRS ports determined and the DMRS port used by the actually transmitted PTRS port are simultaneously applied to different panels.

In another optional manner, the actual number of PTRS ports is a maximum value among numbers of PTRS ports corresponding to TPMIs that are associated with and correspond to different antenna panels/TRPs/beam TCI states/SRS resource sets/TOs of the PUSCH, and the actual number of PTRS ports determined and the DMRS port used by the actually transmitted PTRS port are simultaneously applied on the TOs of the PUSCH corresponding to different antenna panels/TRPs/beam TCI states/SRS resource sets. That is, N equals the larger value of the numbers of PTRS ports corresponding to the TPMI 1/TPMI 2, i.e., max{N1,N2}, and the actual number of PTRS ports determined and the DMRS port used by the actually transmitted PTRS port are simultaneously applied to different panels.

The disclosure does not limit other manners beyond the above optional manners.

The PTRS-DMRS association indication is described in detail below. First, the contents in relevant protocols are described to facilitate understanding of the PTRS-DMRS association indication defined in this disclosure.

For PDSCH/PUSCH channels, a data layer of data transmission corresponds to a DMRS port used for demodulation. A DMRS design for data channels (PDSCH/PUSCH) in NR systems mainly includes design of a front-load DMRS and an additional DMRS. For low-mobility scenarios, the front-load DMRS may achieve channel estimation performance meeting demodulation requirements with low overheads. Depending on a number of orthogonal ports used for transmission, the front-load DMRS may be configured with up to two OFDM symbols. However, a maximum mobility speed considered in the NR system is 500km/h. Facing the mobility with such a large dynamic range, in addition to the front-load DMRS, in a medium/high-speed scenario, more DMRS symbols is required to be inserted within the scheduling duration to meet the estimation accuracy for the channel time variation. The relevant protocols have defined DMRS port allocation tables for different uplink parameter configurations. For different DMRS types (1 or 2), symbol lengths, number of data transmission layers, using or not using transform precoding (e.g., dmrs-Type=1, maxLength=1, rank=1, transform precoder is disabled, which represents the DMRS type 1, the single symbol, the single-stream transmission, not using the transform precoding), the DMRS port may be allocated based on Table 7.3.1.1.2-8 to Table 7.3.1.1.2-23, as shown in Tables 2 to 17 below, which is not described here.

However, port characteristics of the PTRS and the DMRS are correlated. When there are a plurality of DMRS ports, it is necessary to specify which DMRS port(s) share identical port parameters with a given PTRS port, that is, the association relationship between the PTRS port and the DMRS port is specified by the PTRS-DMRS association indication field.

The number of PTRS ports is related to the number of phase noise sources. When there are a plurality of independent phase noise sources, each phase noise source requires a PTRS port for phase estimation. Thus, NR15/16 supports one PTRS port in downlink and two PTRS ports in uplink. Whether the PTRS is transmitted in uplink may be controlled by configuration of a higher layer parameter. If there is no phaseTrackingRS configured for the UE in the higher layer parameter DMRS-UplinkConfig, the UE does not transmit the PTRS in uplink. If there is no phaseTrackingRS configured for the UE in the higher layer parameter DMRS-UplinkConfig, the UE does not transmit the PTRS in uplink. If the parameter UL-PTRS-present is configured for the UE by the higher layer and the number of PTRS ports is 1 or 2, then the PTRS-DMRS association indication field in UL DCI0_1/0_2 indicates that one DMRS port is associated with this PTRS port.

The specific association relationship is shown in the Table 18 to Table 20 above.

In some optional embodiments of the disclosure, in response to a data transmission layer RANK being equal to 1, the PTRS-DMRS association indication field is null, the PTRS is actually received via a single port respectively on different TOs of the PUSCH, and an indicated DMRS port is used for receiving the PTRS. That is, the data transmission layer RANK of the DMRS transmission is more than one layer. When the RANK is equal to 1, the association relationship between the PTRS ports and the DMRS ports is determined, i.e., the PTRS is directly transmitted on the DMRS, and no indication is required at this time.

In some optional embodiments of the disclosure, in response to the RANK being greater than or equal to 2 and the actual number of PTRS ports being 1, the DMRS port corresponding to the actually received PTRS is determined based on the PTRS-DMRS association indication field via one of following manners: indicating an associated DMRS port with 2 bits (this manner may apply to a case that the TPMI corresponds to a fully coherent codeword); or indicating one of first two DMRS ports or one of DMRS ports sharing an identical PTRS port with 1 bit (this manner may apply to a case that the TPMI corresponds to a partially coherent codeword).

Accordingly, the network device may determine the DMRS port used by the actually received PTRS port based on the PTRS-DMRS association indication field, and receive the PTRS using the DMRS port respectively on different TOs of the PUSCH.

That is, when the RANK is greater than or equal to 2 and the number of ports is 1, 2 bits may be used to indicate specific DMRS ports based on Table 2 (see the above Table 7.3.1.1.2-25); or 1 bit may be used to indicate one of the first two DMRS ports or one of DMRS ports sharing an identical PTRS port.

In some optional embodiments of the disclosure, in response to the RANK being greater than or equal to 2 and the actual number of PTRS ports for PUSCH transmission being 2, the DMRS port corresponding to the actually received PTRS is determined based on the PTRS-DMRS association indication field via one of following manners: indicating two associated DMRS ports with 2 bits (this manner may apply to the case that the TPMI corresponds to the fully coherent codeword); or indicating only one of the first two DMRS ports or only one of the two DMRS ports sharing an identical PTRS port with 1 bit (this manner may apply to the case that the TPMI corresponds to the partially coherent codeword).

Accordingly, the UE may determine a first DMRS port corresponding to a first actually received PTRS port on the TOs of the PUSCH corresponding to different antenna panels/TRPs/beam TCI states/SRS resource sets based on the PTRS-DMRS association indication field, determine a second DMRS port corresponding to a second actually received PTRS port on the TOs of the PUSCH corresponding to different antenna panels/TRPs/beam TCI states/SRS resource sets based on a default rule, and receive the PTRS respectively via the first DMRS port and the second DMRS port.

In this case, the PTRS port 0 (i.e., the actually transmitted PTRS port 0) means the first PTRS port actually transmitted, the PTRS port 1 (i.e., the actually transmitted PTRS port 1) means the second PTRS port actually transmitted.

The DMRS port determined based on the default rule is any one of: the other of first two DMRS ports; any one of other DMRS ports when the RANK is greater than 2; or any one of the two DMRS ports sharing the identical PTRS port.

That is, when the RANK is greater than or equal to 2 and the number of ports is 2, 2 bits may be used to indicate specific DMRS ports based on Table 4 (see the above Table 7.3.1.1.2-26); or 1 bit may be used to indicate only one of the first two DMRS ports, or only one of the first two DMRS ports sharing an identical PTRS port; the other PTRS port is sent based on the default rule, for example, the other of first two DMRS ports, or the first of other DMRS ports when the RANK is greater than 2, or the first of two DMRS ports fixedly sharing the identical PTRS port. The disclosure is not limited here.

In some embodiments of the disclosure, when determining the DMRS port associated with the PTRS, the DMRS port associated with the PTRS is determined via respective TPMIs corresponding to respective antenna panels/TRPs/-

beam TCI states/SRS resource sets/TOs of the PUSCH determined based on the preset protocol rule, and identical PTRS ports are received respectively via identical DMRS ports simultaneously on the TOs of the PUSCH corresponding to different antenna panels/TRPs/beam TCI states/SRS resource sets.

In some embodiments of the disclosure, the maximum number of PT-RS ports is obtained by configuring maxNrofPorts as 'n2' in the higher layer parameter PTRS-UplinkConfig. If the indicated maximum number of PTRS ports is 2, the DMRS ports corresponding to the SRS resources on the network side are divided into two groups, and the two DMRS port groups are respectively associated with the two PTRS ports based on the above rules.

In an embodiment of the disclosure, during the R16 study phase, transmission enhancement for the PDSCH is performed based on application of multi-point coordinated transmission technology among downlink multiple TRPs/ antenna panels. Since the data transmission includes scheduling feedbacks for uplink and downlink channels, downlink data channel enhancement alone cannot guarantee the overall service performance in URLLC studies. In R17 studies, the enhancement is continued for the downlink control channel PDCCH, the uplink control channel PUCCH and the uplink data channel PUSCH.

PN is caused by the execution of a local oscillator that destroys the orthogonality between subcarriers in an OFDM system. This causes CPE, which in turn causes modulation constellations to rotate at a fixed angle, and the ICI. The ICI causes scattering of constellation points. This phenomenon is more pronounced at high frequencies. Since the impact of the CPE is greater, NR primarily considers compensation for the CPE. In NR, the PTRS signal is designed for CPE estimation. To enhance the signal coverage and improve the signal quality, the PTRS is configured by the network for the terminal as a UE-specific reference signal. The PTRS is used to track the phase noise introduced by local oscillators in gNB and the UE. The PTRS may be regarded as an extension of DMRS, and has close relationships with the DMRS such as adopting the same precoding, port association, orthogonal sequence generation, and QCL relationships.

The number of PTRS ports relates to the number of phase noise sources. When there are a plurality of independent phase noise sources, each phase noise source requires a PTRS port for phase estimation of the phase noise source.

That is, for codebook-based cases, the network device may indicate, via the TPMI, which DMRS corresponding to a different layer to the UE. The DMRS port indication field of the SRS resource set indicates a group of DMRS port used for demodulation in the PUSCH transmission, and the UE performs transmission based on an indication of the base station. However, for multi-panel scenarios, since TPMIs corresponding to different panels are different, port groupings for codewords actually corresponding to the TPMIs are also different. For example, if the codeword on one of the panels corresponds to a fully coherent codeword and the corresponding PTRS port is 1, while the codeword on another panel corresponds to the PTRS port 2, then the PTRS is sent according to the PTRS port 1 on one panel and according to the PTRS port 2 on the other panel. If the network configures uplink transmission in the SFN transmission mode, the DMRS ports for transmissions on both panels belong to an identical group, i.e., the PUSCH sent on the panel 0 and the PUSCH sent on the panel 1 use the identical group of DMRS ports. As such, there is a clear contradictory. For uplink simultaneous transmission in the SFN transmission mode, all reference signals and data remain consistent. When inconsistent PTRS ports indicated by different TPMIs occur in the current protocol, application of the above solution in the disclosure may effectively resolve this contradictory.

In summary, the above solution of this disclosure may resolve the case that the actual number of PTRS ports corresponding to different TPMIs indicated by the network device are inconsistent, and achieve the enhanced indication for the PTRS transmission in the SFN transmission mode, thus supporting CPE estimation of the terminal with multi-panel under a codebook-based configuration in the SFN scheme for STxMP, so that multi-point coordinated transmission becomes more effective, the reliability and throughput of data transmission are effectively improved.

Further, application of multi-TRP/multi-panel of the base station mainly aims to improve the cell-edge coverage, provide more balanced quality of service within the service area, and transmit data cooperatively among the multiple TRPs/panels in different ways. From a network architecture perspective, network deployment with a large number of distributed access points plus centralized baseband processing is more conducive to providing balanced user experience rates and significantly reducing the delay and signaling overhead caused by handovers. Utilizing the coordination among the multiple TRPs/panels, transmitting/receiving channels via a plurality of beams from a plurality of angles may better overcome various kinds of shadowing/blocking, ensure the robustness of link connections, and is suitable for URLLC services to improve the transmission quality and meet the reliability requirements.

In the above embodiments provided in the disclosure, description is made to the methods of the embodiments of the disclosure from the perspectives of the UE and the network device respectively. In order to realize each of the functions in the methods of the above embodiments of the disclosure, the network device may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Corresponding to the method for controlling uplink transmission provided in the embodiments described above, the disclosure also provides an apparatus for controlling uplink transmission. Since the apparatus for controlling uplink transmission provided in embodiments of the disclosure corresponds to the method provided in the embodiments described above, the implementation of the method for controlling uplink transmission is also applicable to the apparatus for controlling uplink transmission provided in the following embodiments, which will not be described in detail in the following embodiments.

FIG. 6 is a block diagram illustrating an apparatus 600 for controlling uplink transmission according to an embodiment of the disclosure. The apparatus 600 may be configured in a UE.

As shown in FIG. 6, the apparatus 600 may include a transceiver module 610.

The transceiver module 610 is configured to, in an uplink STxMP scenario, under network scheduling of a PUSCH scheduled based on single DCI being a multi-TRP SFN transmission mode, receive transmission configuration information related to a PTRS sent by a network device, in which the transmission configuration information includes at least one of: a maximum number of PTRS ports; a TPMI indication field; a DMRS port indication field, or a PTRS-DMRS association indication field; and for PUSCH transmission based on a codebook, determine an actual PTRS transmission parameter for the PUSCH transmission based on the transmission configuration information related to the PTRS and a preset protocol rule, and send the PTRS in an SFN transmission mode respectively on TOs of the PUSCH corresponding to different antenna panels/TRPs/beam TCI states/SRS resource sets, in which the actual PTRS transmission parameter includes: an actual number of PTRS ports, and a DMRS port used by an actually transmitted PTRS port.

According to the apparatus for controlling uplink transmission provided in the embodiments of the disclosure, in the uplink STxMP scenario, under network scheduling of the PUSCH scheduled based on single DCI being the multi-TRP SFN transmission mode, the transmission configuration information related to the PTRS sent by the network device is received, in which the transmission configuration information includes at least one of: the maximum number of PTRS ports; the TPMI indication field; the DMRS port indication field, or the PTRS-DMRS association indication field; and for PUSCH transmission based on a codebook, the actual PTRS transmission parameter for the PUSCH transmission is determined based on the transmission configuration information and the preset protocol rule, and the PTRS is sent in the SFN transmission mode respectively on TOs of the PUSCH corresponding to different antenna panels/TRPs/beam TCI states/SRS resource sets, in which the actual PTRS transmission parameter includes: the actual number of PTRS ports, and the DMRS port corresponding to the actually transmitted PTRS. The technical solution provided in the disclosure achieves the enhanced indication for the PTRS transmission in the SFN transmission mode, thus supporting CPE estimation of the terminal with multiple panels under a codebook-based configuration in the SFN scheme for STxMP, so that multi-point coordinated transmission becomes more effective, the reliability and throughput of data transmission are effectively improved.

In some embodiments, DMRS ports or DMRS port groups corresponding to the TOs of the PUSCH that are associated with and correspond to different antenna panels/TRPs/beam TCI states/SRS resource sets are identical.

In some embodiments, the transceiver module 610 is specifically configured to, in the multi-TRP SFN transmission mode of the PUSCH, send an identical amount of PTRS port data on the TOs of the PUSCH corresponding to different antenna panels/TRPs/beam TCI states/SRS resource sets, in which each PTRS port data is identical and sent via one or more identical DMRS ports.

In some embodiments, the transceiver module 610 is specifically configured to, in response to different numbers of PTRS ports actually corresponding to precoders indicated by different TPMI indication fields, determine the actual PTRS transmission parameter based on the maximum number of PTRS ports, an association relationship between PTRS-DMRS ports indicated by the PTRS-DMRS association indication field and the preset protocol rule; and send the PTRS in the SFN transmission mode respectively on the TOs of the PUSCH corresponding to different antenna panels/TRPs/beam TCI states/SRS resource sets based on the actual PTRS transmission parameter.

In some embodiments, the preset protocol rule includes any one of: the actual number of PTRS ports being a number of PTRS ports corresponding to a preset TPMI, the preset TPMI being one among TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; the actual number of PTRS ports being a minimum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; or the actual number of PTRS ports being a maximum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets.

In some embodiments, the transceiver module 610 is further configured to receive a RRC signaling sent by the network device, in which the RRC signaling includes the maximum number of PTRS ports, and the actual number of PTRS ports is less than or equal to the maximum number of PTRS ports.

In some embodiments, in response to a data transmission layer RANK being equal to 1, the PTRS-DMRS association indication field is null, the PTRS is actually sent via a single port respectively on different TOs of the PUSCH, and an indicated DMRS port is used for sending the PTRS.

In some embodiments, in response to a data transmission layer RANK being greater than or equal to 2 and the actual number of PTRS ports being 1, the DMRS port used by the actually transmitted PTRS port is determined based on the PTRS-DMRS association indication field via one of following manners: indicating two associated DMRS ports with 2 bits; or indicating one of first two DMRS ports or one of DMRS ports sharing an identical PTRS port with 1 bit; in which sending the PTRS in the SFN transmission mode respectively on the TOs of the PUSCH corresponding to different antenna panels/TRPs/beam TCI states/SRS resource sets includes: determining the DMRS port corresponding to the actually transmitted PTRS based on the PTRS-DMRS association indication field, and sending the PTRS using the DMRS ports respectively on different TOs of the PUSCH.

In some embodiments, in response to a data transmission layer RANK being greater than or equal to 2 and the actual number of PTRS ports for the PUSCH transmission being 2, the DMRS port used by the actually transmitted PTRS port is determined based on the PTRS-DMRS association indication field via one of following manners: indicating two associated DMRS ports with 2 bits; or indicating only one of first two DMRS ports or only one of two DMRS ports sharing an identical PTRS port with 1 bit; in which sending the PTRS in the SFN transmission mode respectively on the TOs of the PUSCH corresponding to different antenna panels/TRPs/beam TCI states/SRS resource sets includes: determining a first DMRS port corresponding to a first actually transmitted PTRS port on the TOs of the PUSCH corresponding to different antenna panels/TRPs/beam TCI states/SRS resource sets based on the PTRS-DMRS association indication field, determining a second DMRS port corresponding to a second actually transmitted PTRS port on the TOs of the PUSCH corresponding to different antenna panels/TRPs/beam TCI states/SRS resource sets based on a default rule, and sending the PTRS respectively via the first DMRS port and the second DMRS port.

In some embodiments, the DMRS port determined based on the default rule is any one of: the other of first two DMRS ports; any one of other DMRS ports when the data transmission layer RANK is greater than 2; or any one of the two DMRS ports sharing the identical PTRS port.

In some embodiments of the disclosure, when determining the DMRS port associated with the PTRS, the DMRS port associated with the PTRS is determined via respective TPMIs corresponding to respective antenna panels/TRPs/beam TCI states/SRS resource sets/TOs of the PUSCH determined based on the preset protocol rule, and identical PTRS ports are sent respectively on identical DMRS ports simultaneously on the TOs of the PUSCH corresponding to different antenna panels/TRPs/beam TCI states/SRS resource sets.

In some embodiments, different SRS resource sets are associated with PUSCH transmissions on multiple antenna panels, and a corresponding relationship between different SRS resource sets and SRI/TPMI indication fields is indicated by an SRS resource set indicator indication field.

In summary, the apparatus for controlling uplink transmission may resolve the case that the actual number of PTRS ports corresponding to different TPMIs indicated by the network device are inconsistent, and achieve the enhanced indication for the PTRS transmission in the SFN transmission mode, thus supporting CPE estimation of the terminal with multiple panels under a codebook-based configuration in the SFN scheme for STxMP, so that multi-point coordinated transmission becomes more effective, and the reliability and throughput of data transmission are effectively improved. Further, application of multi-TRP/multi-panel of the base station mainly aims to improve the cell-edge coverage, provide more balanced quality of service within the service area, and transmit data cooperatively among the multiple TRPs/panels in different ways. From a network architecture perspective, network deployment with a large number of distributed access points plus centralized baseband processing is more conducive to providing balanced user experience rates and significantly reducing the delay and signaling overhead caused by handovers. Utilizing the coordination among the multiple TRPs/panels, transmitting/receiving channels via a plurality of beams from a plurality of angles may better overcome various kinds of shadowing/blocking, ensure the robustness of link connections, and is suitable for URLLC services to improve the transmission quality and meet the reliability requirements.

FIG. 7 is a block diagram illustrating an apparatus 700 for controlling uplink transmission according to an embodiment of the disclosure. The apparatus 700 may be configured in a network device.

As shown in FIG. 7, the apparatus 700 may include a transceiver module 710.

The transceiver module 710 is configured to, in an uplink STxMP scenario, under network scheduling of a PUSCH scheduled based on single DCI being a multi-TRP SFN transmission mode, send transmission configuration information related to a PTRS to a UE, in which the transmission configuration information includes at least one of: a maximum number of PTRS ports; a TPMI indication field; a DMRS port indication field, or a PTRS-DMRS association indication field; and for PUSCH transmission based on a codebook, determine an actual PTRS receiving parameter for the PUSCH transmission based on the transmission configuration information related to the PTRS and a preset protocol rule, and receive the PTRS in an SFN transmission mode respectively on TOs of the PUSCH corresponding to different antenna panels/TRPs/beam TCI states/SRS resource sets, in which the actual PTRS receiving parameter includes: an actual number of PTRS ports, and a DMRS port corresponding to an actually received PTRS.

According to the apparatus for controlling uplink transmission provided in the embodiments of the disclosure, in the uplink STxMP scenario, when the PUSCH configured by the network is in the multi-TRP SFN transmission mode, the network device sends the transmission configuration information related to the PTRS sent to the UE. The transmission configuration information includes at least one of: the maximum number of PTRS ports; the TPMI indication field; the DMRS port indication field, or the PTRS-DMRS association indication field. For the PUSCH transmission based on the codebook, the actual PTRS receiving parameter for the PUSCH transmission is determined based on the transmission configuration information related to the PTRS and the preset protocol rule, and the PTRS is received in the SFN transmission mode respectively on TOs of the PUSCH corresponding to different antenna panels/TRPs/beam TCI states/SRS resource sets, in which the actual PTRS receiving parameter includes: the actual number of PTRS ports, and the DMRS port corresponding to the actually transmitted PTRS. The technical solution provided in the disclosure achieves the enhanced indication for the PTRS transmission in the SFN transmission mode, thus supporting CPE estimation of the terminal with multiple panel under a codebook-based configuration in the SFN scheme for STxMP, so that multi-point coordinated transmission becomes more effective, the reliability and throughput of data transmission are effectively improved

In some embodiments, DMRS ports or DMRS port groups corresponding to the TOs of the PUSCH that are associated with and correspond to different antenna panels/TRPs/beam TCI states/SRS resource sets are identical.

In some embodiments, the transceiver module 710 is specifically configured to, in the multi-TRP SFN transmission mode of the PUSCH, receive an identical amount of PTRS port data on the TOs of the PUSCH corresponding to different antenna panels/TRPs/beam TCI states/SRS resource sets, in which each PTRS port data is identical and received via one or more identical DMRS ports.

In some embodiments, the transceiver module 710 is specifically configured to, in response to different numbers of PTRS ports actually corresponding to precoders indicated by different TPMI indication fields, determine the actual PTRS receiving parameter based on the preset protocol rule, and receive the SFN respectively on the TOs of the PUSCH corresponding to different antenna panels/TRPs/beam TCI states/SRS resource sets.

In some embodiments, the preset protocol rule includes any one of: the actual number of PTRS ports being a number of PTRS ports corresponding to a preset TPMI, the preset TPMI being one among TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; the actual number of PTRS ports being a minimum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; or the actual number of PTRS ports being a maximum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets.

In some embodiments, the transceiver module 710 is specifically configured to send an RRC signaling to the UE, in which the RRC signaling includes the maximum number of PTRS ports, and the actual number of PTRS ports is less than or equal to the maximum number of PTRS ports.

In some embodiments, in response to a data transmission layer RANK being equal to 1, the PTRS-DMRS association indication field is null, the PTRS is actually received via a single port respectively on different TOs of the PUSCH, and an indicated DMRS port is used for receiving the PTRS.

In some embodiments, in response to a data transmission layer RANK being greater than or equal to 2 and the actual number of PTRS ports being 1, the DMRS port corresponding to the actually received PTRS is determined based on the PTRS-DMRS association indication field via one of following manners: indicating two associated DMRS ports with 2 bits; or indicating one of first two DMRS ports or one of DMRS ports sharing an identical PTRS port with 1 bit; in which receiving the PTRS in the SFN transmission mode respectively on the TOs of the PUSCH corresponding to different antenna panels/TRPs/beam TCI states/SRS resource sets includes: determining the DMRS port used by the actually received PTRS port based on the PTRS-DMRS association indication field, and receiving the PTRS using the DMRS port respectively on different TOs of the PUSCH.

In some embodiments, in response to a data transmission layer RANK being greater than or equal to 2 and the actual number of PTRS ports being 2, the DMRS port corresponding to the actually received PTRS is determined based on the PTRS-DMRS association indication field via one of following manners: indicating two associated DMRS ports with 2 bits; or indicating only one of the first two DMRS ports or only one of the two DMRS ports sharing an identical PTRS port with 1 bit; in which receiving the PTRS in the SFN transmission mode respectively on the TOs of the PUSCH corresponding to different antenna panels/TRPs/beam TCI states/SRS resource sets includes: determining a first DMRS port corresponding to a first actually received PTRS port on the TOs of the PUSCH corresponding to different antenna panels/TRPs/beam TCI states/SRS resource sets based on the PTRS-DMRS association indication field, determining a second DMRS port corresponding to a second actually received PTRS port on the TOs of the PUSCH corresponding to different antenna panels/TRPs/beam TCI states/SRS resource sets based on a default rule, and receiving the PTRS respectively via the first DMRS port and the second DMRS port.

In some embodiments, the DMRS port determined based on the default rule is any one of: the other of first two DMRS ports; any one of other DMRS ports when the data transmission layer RANK is greater than 2; or any one of the two DMRS ports sharing the identical PTRS port.

In some embodiments of the disclosure, when determining the DMRS port associated with the PTRS, the DMRS port associated with the PTRS is determined via respective TPMIs corresponding to respective antenna panels/TRPs/beam TCI states/SRS resource sets/TOs of the PUSCH determined based on the preset protocol rule, and identical PTRS ports are received respectively on identical DMRS ports simultaneously on the TOs of the PUSCH corresponding to different antenna panels/TRPs/beam TCI states/SRS resource sets.

In some embodiments, different SRS resource sets are associated with the PUSCH transmissions on multiple antenna panels, and a corresponding relationship between different SRS resource sets and SRI/TPMI fields is indicated by an SRS resource set indicator indication field.

In summary, the apparatus for controlling uplink transmission may resolve the case that the actual number of PTRS ports corresponding to different TPMIs indicated by the network device are inconsistent, and achieve the enhanced indication for the PTRS transmission in the SFN transmission mode, thus supporting CPE estimation of the terminal with multiple panels under a codebook-based configuration in the SFN scheme for STxMP, so that multi-point coordinated transmission becomes more effective, and the reliability and throughput of data transmission are effectively improved. Further, application of multi-TRP/multi-panel of the base station mainly aims to improve the cell-edge coverage, provide more balanced quality of service within the service area, and transmit data cooperatively among the multiple TRPs/panels in different ways. From a network architecture perspective, network deployment with a large number of distributed access points plus centralized baseband processing is more conducive to providing balanced user experience rates and significantly reducing the delay and signaling overhead caused by handovers. Utilizing the coordination among the multiple TRPs/panels, transmitting/receiving channels via a plurality of beams from a plurality of angles may better overcome various kinds of shadowing/blocking, ensure the robustness of link connections, and is suitable for URLLC services to improve the transmission quality and meet the reliability requirements.

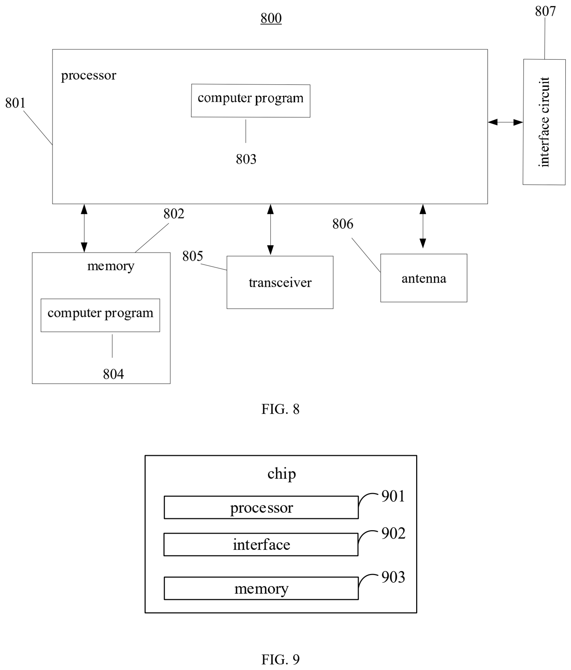

Referring to FIG. 8, FIG. 8 is a block diagram illustrating a structure of a communication device 800 provided in an embodiment of the disclosure. The communication device 800 may be a network device, a UE, a chip, a system on chip or a processor that supports the network device to implement the method, or a chip, a system on chip or a processor that supports the UE to implement the method. The communication device may be configured to implement the method described in the method embodiments, which may refer to descriptions in the method embodiments.

The communication device 800 may include one or more processors 801. The processor 801 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

Optionally, the communication device 800 may further include one or more memories 802 with a computer program 804 stored. The processor 801 executes the computer program 804 so that the communication device 800 performs the method as described in the above method embodiments. Optionally, the memory 802 may further store data. The communication device 800 and the memory 802 may be independently configured or integrated together.

Optionally, the communication device 800 may further include a transceiver 805 and an antenna 806. The transceiver 805 may be referred to as a transceiving unit, a transceiver or a transceiving circuit, which may be configured to achieve a transceiving function. The transceiver 805 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

Optionally, the communication device 800 may further include one or more interface circuits 807. The interface circuit 807 is configured to receive code instructions and transmit the code instructions to the processor 801. The processor 801 runs the code instructions so that the communication device 800 performs the method according to the above method embodiment.

In an implementation, the processor 801 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 801 may be stored with a computer program 803. The computer program 803 is running on the processor 801 so that the communication device 800 performs the method as described in the above method embodiments. The computer program 803 may be solidified in the processor 801, in which case the processor may be implemented by hardware.

In an implementation, the communication device 800 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device 800 described in the above embodiments may be a network device or a UE, but the scope of the communication device described in the disclosure is not limited, and a structure of the communication device may not be limited by FIG. 8. The communication device may be a stand-alone device or may be a part of a larger device. For example, the communication device may be the following.

(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.;
(6) others, and so forth.

For the cases that the communication device may be a chip or chip system, FIG. 9 shows a block diagram illustrating a structure of a chip. The chip shown in FIG. 9 includes a processor 901 and an interface 902. The number of processors 901 may be one or more and the number of interfaces 902 may be more than one.

Optionally, the chip further includes a memory 903, configured to save necessary computer program and data.

Those skilled in the related art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

A readable storage medium with instructions stored thereon is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another one website, computer, server, or data center via wire (such as a coaxial cable, a fiber optic, a digital subscriber line (DSL)) or wireless (such as infrared, wireless, microwave) means. The computer-readable storage medium may be any available medium that may be accessed by a computer or a data storage device such as a server or a data center that integrates one or more of the available media. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are

**EP 4 657 958 A1**

distinguished merely for convenience of description, and are not intended to limit the scope of embodiments of the disclosure, but also to indicate an order of precedence.

The phase "at least one" in the disclosure may also be described as one or more, and the phase "a plurality of" may refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used in the disclosure, the terms "machine-readable medium" and "computer-readable medium" refer to any computer program product, device, and/or apparatus (e.g., a disk, an optical disk, a memory, a programmable logic device (PLD)) that is used to provide machine instructions and/or data to a programmable processor, including a machine-readable medium that receives machine instructions as machine-readable signals. The term "machine-readable signal" refers to any signal used to provide machine instructions and/or data to a programmable processor.

The system and technology described in the disclosure may be implemented in a computing system that includes backend components (e.g., as a data server), or in a computing system that includes middleware components (e.g., an application server), or in a computing system that includes frontend components (e.g., a user computer with a graphical user interface or web browser, through which a user can interact with the system and technology described herein), or in any combination of the backend components, the middleware components, or the frontend components. The components of the system can be interconnected via any form or medium of digital data communication (e.g., communication networks). Examples of communication networks include local area networks (LAN), wide area networks (WAN), and the internet.

A computer system may include both clients and servers. The client and server are typically located remotely from each other and usually interact through a communication network. The client-server relationship is established by running computer programs on respective computers that have a client-server relationship with each other.

It should be understood that the various forms of processes shown above may be used to reorder, add or delete steps. For example, the steps described in the disclosure could be performed in parallel, sequentially, or in a different order, as long as the desired result of the technical solution disclosed in the disclosure may be achieved, which is not limited in the disclosure.

In addition, it should be understood that various embodiments of the disclosure may be implemented individually or in conjunction with other embodiments as permitted by the program.

A person of ordinary skill in the art may be aware that units and algorithm steps of the examples described in connection with the embodiments disclosed in the disclosure may be implemented by electronic hardware, or a combination of computer software and electronic hardware. Whether the functions are performed by hardware or software depends on specific applications and design constraint conditions of the technical solutions. Those skilled in the art may use different methods to implement the described functions for each specific application, but it should not be considered that the implementation goes beyond the scope of the disclosure.

Those skilled in the art may clearly understand that, for the convenience and brevity of description, the described system, apparatus, and specific working process of the unit may refer to a corresponding process in the above method embodiments, and details are not described here again.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for controlling uplink transmission, performed by a user equipment (UE), comprising:

   in an uplink simultaneous transmission from multiple panels (STxMP) scenario, under network scheduling of a physical uplink shared channel (PUSCH) scheduled based on single downlink control information (DCI) being a multi- transmission and reception point (TRP) single frequency network (SFN) transmission mode, receiving transmission configuration information related to a phase-tracking reference signal (PTRS) sent by a network device, wherein the transmission configuration information comprises at least one of: a maximum number of PTRS ports; a transmission precoding matrix indicator (TPMI) indication field; a demodulation reference signal (DMRS) port indication field, or a PTRS-DMRS association indication field; and
   for PUSCH transmission based on a codebook, determining an actual PTRS transmission parameter for the PUSCH transmission based on the transmission configuration information related to the PTRS and a preset protocol rule, and sending the PTRS in an SFN transmission mode respectively on transmission occasions (TOs) of the PUSCH corresponding to different antenna panels/TRPs/beam transmission configuration indication (TCI) states/sounding reference signal (SRS) resource sets, wherein the actual PTRS transmission parameter comprises: an actual number of PTRS ports, and a DMRS port used by an actually transmitted PTRS port.

2. The method according to claim 1, wherein DMRS ports or DMRS port groups corresponding to the TOs of the PUSCH that are associated with and correspond to different antenna panels/TRPs/beam TCI states/SRS resource sets are identical.

3. The method according to claim 1 or 2, wherein sending the PTRS in the SFN transmission mode respectively on the TOs of the PUSCH corresponding to different antenna panels/TRPs/beam TCI states/SRS resource sets comprises: in the multi-TRP SFN transmission mode of the PUSCH, sending an identical amount of PTRS port data on the TOs of the PUSCH corresponding to different antenna panels/TRPs/beam TCI states/SRS resource sets, wherein each PTRS port data is identical and sent via one or more identical DMRS ports.

4. The method according to any one of claims 1 to 3, wherein determining the actual PTRS transmission parameter for the PUSCH transmission based on the transmission configuration information related to the PTRS and the preset protocol rule, and sending the PTRS in the SFN transmission mode respectively on the TOs of the PUSCH corresponding to different antenna panels/TRPs/beam TCI states/SRS resource sets comprises:

    in response to different numbers of PTRS ports actually corresponding to precoders indicated by different TPMI indication fields, determining the actual PTRS transmission parameter based on the maximum number of PTRS ports, an association relationship between PTRS-DMRS ports indicated by the PTRS-DMRS association indication field and the preset protocol rule; and
    sending the PTRS in the SFN transmission mode respectively on the TOs of the PUSCH corresponding to different antenna panels/TRPs/beam TCI states/SRS resource sets based on the actual PTRS transmission parameter.

5. The method according to any one of claims 1 to 4, wherein the preset protocol rule comprises any one of:

    the actual number of PTRS ports being a number of PTRS ports corresponding to a preset TPMI, the preset TPMI being one among TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets;
    the actual number of PTRS ports being a minimum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; or
    the actual number of PTRS ports being a maximum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets.

6. The method according to any one of claims 1 to 5, further comprising:

    receiving a radio resource control (RRC) signaling sent by the network device,
    wherein the RRC signaling comprises the maximum number of PTRS ports, and the actual number of PTRS ports is less than or equal to the maximum number of PTRS ports.

7. The method according to any one of claims 1 to 6, wherein
    in response to a data transmission layer RANK being equal to 1, the PTRS-DMRS association indication field is null, the PTRS is actually sent via a single port respectively on different TOs of the PUSCH, and an indicated DMRS port is used for sending the PTRS.

8. The method according to any one of claims 1 to 7, wherein
    in response to a data transmission layer RANK being greater than or equal to 2 and the actual number of PTRS ports being 1, the DMRS port used by the actually transmitted PTRS port is determined based on the PTRS-DMRS association indication field via one of following manners:

indicating an associated DMRS port with 2 bits; or
indicating one of first two DMRS ports or one of DMRS ports sharing an identical PTRS port with 1 bit;
wherein sending the PTRS in the SFN transmission mode respectively on the TOs of the PUSCH corresponding to different antenna panels/TRPs/beam TCI states/SRS resource sets comprises:
determining the DMRS port used by the actually transmitted PTRS port based on the PTRS-DMRS association indication field, and sending the PTRS using the DMRS ports respectively on different TOs of the PUSCH.

9. The method according to any one of claims 1 to 8, wherein:
in response to a data transmission layer RANK being greater than or equal to 2 and the actual number of PTRS ports being 2, the DMRS port used by the actually transmitted PTRS port is determined based on the PTRS-DMRS association indication field via one of following manners:

indicating two associated DMRS ports with 2 bits; or
indicating only one of first two DMRS ports or only one of two DMRS ports sharing an identical PTRS port with 1 bit;
wherein sending the PTRS in the SFN transmission mode respectively on the TOs of the PUSCH corresponding to different antenna panels/TRPs/beam TCI states/SRS resource sets comprises:
determining a first DMRS port corresponding to a first actually transmitted PTRS port on the TOs of the PUSCH corresponding to different antenna panels/TRPs/beam TCI states/SRS resource sets based on the PTRS-DMRS association indication field, determining a second DMRS port corresponding to a second actually transmitted PTRS port on the TOs of the PUSCH corresponding to different antenna panels/TRPs/beam TCI states/SRS resource sets based on a default rule, and sending the PTRS respectively via the first DMRS port and the second DMRS port.

10. The method according to claim 9, wherein the DMRS port determined based on the default rule is any one of:

the other of first two DMRS ports;
any one of other DMRS ports when the data transmission layer RANK is greater than 2; or
any one of the two DMRS ports sharing the identical PTRS port.

11. The method according to any one of claims 1 to 10, wherein
the actual number of PTRS ports and the DMRS port used by the actually transmitted PTRS port are determined via respective TPMIs corresponding to respective antenna panels/TRPs/beam TCI states/SRS resource sets/TOs of the PUSCH determined based on the preset protocol rule, and identical PTRS ports are sent respectively on identical DMRS ports simultaneously on the TOs of the PUSCH corresponding to different antenna panels/TRPs/beam TCI states/SRS resource sets.

12. The method according to any one of claims 1 to 11, wherein
different SRS resource sets are associated with PUSCH transmissions on multiple antenna panels, and a corresponding relationship between different SRS resource sets and SRS resource indicator (SRI)/TPMI indication fields is indicated by an SRS resource set indicator indication field.

13. A method for controlling uplink transmission, performed by a network device, comprising:

in an uplink simultaneous transmission from multiple panels (STxMP) scenario, under network scheduling of a physical uplink shared channel (PUSCH) scheduled based on single downlink control information (DCI) being a multi- transmission and reception point (TRP) single frequency network (SFN) transmission mode, sending transmission configuration information related to a phase-tracking reference signal (PTRS) to a user equipment (UE), wherein the transmission configuration information comprises at least one of: a maximum number of PTRS ports; a transmission precoding matrix indicator (TPMI) indication field; a demodulation reference signal (DMRS) port indication field, or a PTRS-DMRS association indication field; and
for PUSCH transmission based on a codebook, determining an actual PTRS receiving parameter for the PUSCH transmission based on the transmission configuration information related to the PTRS and a preset protocol rule, and receiving the PTRS in an SFN transmission mode respectively on transmission occasions (TOs) of the PUSCH corresponding to different antenna panels/TRPs/beam transmission configuration indication (TCI) states/sounding reference signal (SRS) resource sets, wherein the actual PTRS receiving parameter comprises:

an actual number of PTRS ports, and a DMRS port corresponding to an actually received PTRS.

14. The method according to claim 13, wherein DMRS ports or DMRS port groups corresponding to the TOs of the PUSCH that are associated with and correspond to different antenna panels/TRPs/beam TCI states/SRS resource sets are identical.

15. The method according to claim 13 or 14, wherein receiving the PTRS in the SFN transmission mode respectively on the TOs of the PUSCH corresponding to different antenna panels/TRPs/beam TCI states/SRS resource sets comprises:

    in the multi-TRP SFN transmission mode of the PUSCH, receiving an identical amount of PTRS port data on the TOs of the PUSCH corresponding to different antenna panels/TRPs/beam TCI states/SRS resource sets, wherein each PTRS port data is identical and received via one or more identical DMRS ports.

16. The method according to any one of claims 13 to 15, wherein determining the actual PTRS receiving parameter for the PUSCH transmission based on the transmission configuration information and the preset protocol rule, and receiving the PTRS in the SFN transmission mode respectively on the TOs of the PUSCH corresponding to different antenna panels/TRPs/beam TCI states/SRS resource sets comprises:

    in response to different numbers of PTRS ports actually corresponding to precoders indicated by different TPMI indication fields, determining the actual PTRS receiving parameter based on the preset protocol rule, and receiving the SFN respectively on the TOs of the PUSCH corresponding to different antenna panels/TRPs/beam TCI states/SRS resource sets.

17. The method according to any one of claims 13 to 16, wherein the preset protocol rule comprises any one of:

    the actual number of PTRS ports being a number of PTRS ports corresponding to a preset TPMI, the preset TPMI being one among TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets;

    the actual number of PTRS ports being a minimum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets; or

    the actual number of PTRS ports being a maximum value among numbers of PTRS ports corresponding to TPMIs that are associated with and correspond to different antenna panels/TRPs/beam TCI states/SRS resource sets/TOs of the PUSCH, and applying the actual number of PTRS ports determined and the DMRS port used by the actually transmitted PTRS port simultaneously on the TOs of the PUSCH corresponding to different antenna panels/TRPs/beam TCI states/SRS resource sets.

18. The method according to any one of claims 13 to 17, further comprising:

    sending a radio resource control (RRC) signaling to the UE,
    wherein the RRC signaling comprises the maximum number of PTRS ports, and the actual number of PTRS ports is less than or equal to the maximum number of PTRS ports.

19. The method according to any one of claims 13 to 18, wherein
    in response to a data transmission layer RANK being equal to 1, the PTRS-DMRS association indication field is null, the PTRS is actually received via a single port respectively on different TOs of the PUSCH, and an indicated DMRS port is used for receiving the PTRS.

20. The method according to any one of claims 13 to 19, wherein
    in response to a data transmission layer RANK being greater than or equal to 2 and the actual number of PTRS ports being 1, the DMRS port used by the actually transmitted PTRS port is determined based on the PTRS-DMRS association indication field via one of following manners:

    indicating an associated DMRS port with 2 bits; or
    indicating one of first two DMRS ports or one of DMRS ports sharing an identical PTRS port with 1 bit;

wherein receiving the PTRS in the SFN transmission mode respectively on the TOs of the PUSCH corresponding to different antenna panels/TRPs/beam TCI states/SRS resource sets comprises:
determining the DMRS port used by the actually received PTRS port based on the PTRS-DMRS association indication field, and receiving the PTRS using the DMRS port respectively on different TOs of the PUSCH.

21. The method according to any one of claims 13 to 20, wherein:
in response to a data transmission layer rank being greater than or equal to 2 and the actual number of PTRS ports being 2, the DMRS port used by the actually transmitted PTRS port is determined based on the PTRS-DMRS association indication field via one of following manners:

indicating two associated DMRS ports with 2 bits; or
indicating only one of the first two DMRS ports or only one of the two DMRS ports sharing an identical PTRS port with 1 bit;
wherein receiving the PTRS in the SFN transmission mode respectively on the TOs of the PUSCH corresponding to different antenna panels/TRPs/beam TCI states/SRS resource sets comprises:
determining a first DMRS port corresponding to a first actually received PTRS port on the TOs of the PUSCH corresponding to different antenna panels/TRPs/beam TCI states/SRS resource sets based on the PTRS-DMRS association indication field, determining a second DMRS port corresponding to a second actually received PTRS port on the TOs of the PUSCH corresponding to different antenna panels/TRPs/beam TCI states/SRS resource sets based on a default rule, and receiving the PTRS respectively via the first DMRS port and the second DMRS port.

22. The method according to claim 21, wherein the DMRS port determined based on the default rule is any one of:

the other of first two DMRS ports;
any one of other DMRS ports when the data transmission layer rank is greater than 2; or
any one of the two DMRS ports sharing the identical PTRS port.

23. The method according to any one of claims 13 to 22, wherein
the actual number of PTRS ports and the DMRS port used by the actually transmitted PTRS port are determined via respective TPMIs corresponding to respective antenna panels/TRPs/beam TCI states/SRS resource sets/TOs of the PUSCH determined based on the preset protocol rule, and identical PTRS ports are received respectively on identical DMRS ports simultaneously on the TOs of the PUSCH corresponding to different antenna panels/TRPs/beam TCI states/SRS resource sets.

24. The method according to any one of claims 13 to 23, wherein
different SRS resource sets are associated with the PUSCH transmissions on multiple antenna panels, and a corresponding relationship between different SRS resource sets and SRS resource indicator (SRI)/TPMI indication fields is indicated by an SRS resource set indicator indication field.

25. An apparatus for controlling uplink transmission, configured in a user equipment (UE), comprising a transceiver module, wherein the transceiver module is configured to:

in an uplink simultaneous transmission from multiple panels (STxMP) scenario, under network scheduling of a physical uplink shared channel (PUSCH) scheduled based on single downlink control information (DCI) being a multi- transmission and reception point (TRP) single frequency network (SFN) transmission mode, receive transmission configuration information related to a phase-tracking reference signal (PTRS) sent by a network device, wherein the transmission configuration information comprises at least one of: a maximum number of PTRS ports; a transmission precoding matrix indicator (TPMI) indication field; a demodulation reference signal (DMRS) port indication field, or a PTRS-DMRS association indication field; and
for PUSCH transmission based on a codebook, determine an actual PTRS transmission parameter for the PUSCH transmission based on the transmission configuration information related to the PTRS and a preset protocol rule, and send the PTRS in an SFN transmission mode respectively on transmission occasions (TOs) of the PUSCH corresponding to different antenna panels/TRPs/beam transmission configuration indication (TCI) states/sounding reference signal (SRS) resource sets, wherein the actual PTRS transmission parameter comprises: an actual number of PTRS ports, and a DMRS port used by an actually transmitted PTRS port.

26. An apparatus for controlling uplink transmission, configured in a network device, comprising a transceiver module, wherein the transceiver module is configured to:

in an uplink simultaneous transmission from multiple panels (STxMP) scenario, under network scheduling of a physical uplink shared channel (PUSCH) scheduled based on single downlink control information (DCI) being a multi- transmission and reception point (TRP) single frequency network (SFN) transmission mode, send transmission configuration information related to a phase-tracking reference signal (PTRS) to a user equipment (UE), wherein the transmission configuration information comprises at least one of: a maximum number of PTRS ports; a transmission precoding matrix indicator (TPMI) indication field; a demodulation reference signal (DMRS) port indication field, or a PTRS-DMRS association indication field; and

for PUSCH transmission based on a codebook, determine an actual PTRS receiving parameter for the PUSCH transmission based on the transmission configuration information related to the PTRS and a preset protocol rule, and receive the PTRS in an SFN transmission mode respectively on transmission occasions (TOs) of the PUSCH corresponding to different antenna panels/TRPs/beam transmission configuration indication (TCI) states/sounding reference signal (SRS) resource sets, wherein the actual PTRS receiving parameter comprises: an actual number of PTRS ports, and a DMRS port corresponding to an actually received PTRS.

27. A communication device, comprising: a transceiver; a memory; a processor connected to the transceiver and the memory, configured to control wireless signal transmission and reception of the transceiver by executing computer-executable instructions stored in the memory, and enable the method according to any one of claims 1 to 24 to be implemented.

28. A computer storage medium, storing computer-executable instructions which, when executed by a processor, enable the method according to any one of claims 1 to 24 to be implemented.

FIG. 1

in an uplink STxMP scenario, under network scheduling of a PUSCH scheduled based on single DCI being a multi-TRP SFN transmission mode, receiving transmission configuration information related to a PTRS sent by a network device, wherein the transmission configuration information includes at least one of: a maximum number of PTRS ports; a TPMI indication field; a DMRS port indication field, or a PTRS-DMRS association indication field ⎯ S201

determining an actual PTRS transmission parameter for the PUSCH transmission based on the transmission configuration information related to the PTRS and a preset protocol rule, and sending the PTRS in an SFN transmission mode respectively on TOs of the PUSCH corresponding to different antenna panels/TRPs/beam TCI states/SRS resource sets, wherein the actual PTRS transmission parameter includes: an actual number of PTRS ports, and a DMRS port used by an actually transmitted PTRS port ⎯ S202

FIG. 2

in an uplink STxMP scenario, under network scheduling of a PUSCH scheduled based on single DCI being a multi-TRP SFN transmission mode, sending transmission configuration information related to a PTRS to a UE, wherein the transmission configuration information includes at least one of: a maximum number of PTRS ports; a TPMI indication field; a DMRS port indication field, or a PTRS-DMRS association indication field

S301

determining an actual PTRS transmission parameter for the PUSCH transmission based on the transmission configuration information and the preset protocol rule, and in the SFN transmission mode, sending an identical amount of PTRS port data on the TOs of the PUSCH corresponding to different antenna panels/TRPs/beam TCI states/SRS resource sets

S302

FIG. 3

in an uplink STxMP scenario, under network scheduling of a PUSCH scheduled based on single DCI being a multi-TRP SFN transmission mode, sending transmission configuration information related to a PTRS to a UE, wherein the transmission configuration information includes at least one of: a maximum number of PTRS ports; a TPMI indication field; a DMRS port indication field, or a PTRS-DMRS association indication field

S401

for PUSCH transmission based on a codebook, determining an actual PTRS receiving parameter for the PUSCH transmission based on the transmission configuration information related to the PTRS and a preset protocol rule, and receiving the PTRS in an SFN transmission mode respectively on TOs of the PUSCH corresponding to different antenna panels/TRPs/beam TCI states/SRS resource sets, wherein the actual PTRS receiving parameter includes: an actual number of PTRS ports, and a DMRS port corresponding to an actually received PTRS

S402

FIG. 4

in an uplink STxMP scenario, under network scheduling of a PUSCH scheduled based on single DCI being a multi-TRP SFN transmission mode, sending transmission configuration information related to a PTRS to a UE, wherein the transmission configuration information includes at least one of: a maximum number of PTRS ports; a TPMI indication field; a DMRS port indication field, or a PTRS-DMRS association indication field

— S501

for PUSCH transmission based on a codebook, in the multi-TRP SFN transmission mode of the PUSCH, receiving an identical amount of PTRS port data on the TOs of the PUSCH corresponding to different antenna panels/TRPs/beam TCI states/SRS resource sets, wherein each PTRS port data is identical and received via one or more identical DMRS ports

— S502

FIG. 5

— 600

apparatus for controlling uplink transmission

transceiver module — 601

FIG. 6

— 700

apparatus for controlling uplink transmission

transceiver module — 701

FIG. 7

800

807

processor

computer program

801

803

interface circuit

802

memory

computer program

804

805

transceiver

806

antenna

FIG. 8

chip

processor                901

interface                902

memory                   903

FIG. 9

## INTERNATIONAL SEARCH REPORT

| International application No. |
| --- |
| **PCT/CN2023/073578** |

**A. CLASSIFICATION OF SUBJECT MATTER**

H04W72/232(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 多, 面板, 同时, 传输, 相位跟踪参考信号, 相位追踪参考信号, 单频网, 物理上行共享信道, 传输接收点, 配置, 端口, 解调参考信号, STxMP, PTRS, SFN, PUSCH, TRP, DMRS, multiple, panel, simultaneous, transmission, phase-tracking reference signal, single frequency network, physical uplink shared channel, transmission and reception point, configuration, port, demodulation reference signal

**C. DOCUMENTS CONSIDERED TO BE RELEVANT**

| Category* | Citation of document, with indication, where appropriate, of the relevant passages | Relevant to claim No. |
| --- | --- | --- |
| A | CN 113767594 A (LG ELECTRONICS INC.) 07 December 2021 (2021-12-07) description, paragraphs [0495]-[0537] | 1-28 |
| A | CN 111512582 A (GUANGDONG OPPO MOBILE COMMUNICATIONS CO., LTD.) 07 August 2020 (2020-08-07) entire document | 1-28 |
| A | CN 112703753 A (GUANGDONG OPPO MOBILE COMMUNICATIONS CO., LTD.) 23 April 2021 (2021-04-23) entire document | 1-28 |
| A | CN 113271188 A (DATANG MOBILE COMMUNICATIONS EQUIPMENT CO., LTD.) 17 August 2021 (2021-08-17) entire document | 1-28 |
| A | CN 115516958 A (NTT DOCOMO INC.) 23 December 2022 (2022-12-23) entire document | 1-28 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 June 2023** | **07 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 657 958 A1

INTERNATIONAL SEARCH REPORT
Information on patent family members

International application No.

**PCT/CN2023/073578**

| Patent document cited in search report | | | Publication date (day/month/year) | Patent family member(s) | Publication date (day/month/year) |
|---|---|---|---|---|---|
| CN | 113767594 | A | 07 December 2021 | None | |
| CN | 111512582 | A | 07 August 2020 | None | |
| CN | 112703753 | A | 23 April 2021 | None | |
| CN | 113271188 | A | 17 August 2021 | None | |
| CN | 115516958 | A | 23 December 2022 | None | |

Form PCT/ISA/210 (patent family annex) (July 2022)

43